# EUROPEAN PATENT APPLICATION

(11) **EP 4 590 016 A1**
(43) Date of publication of application: **23.07.2025**
(21) Application number: 23876460.9
(22) Date of filing: 15.09.2023
(51) Int. Cl.: H04W 24/08

(54) **COMMUNICATION METHOD AND APPARATUS, AND COMPUTER-READABLE STORAGE MEDIUM**

(30) Priority: 10.10.2022 CN 202211233672
(71) Applicant: Huawei Technologies Co., Ltd., Shenzhen, Guangdong 518129 (CN)
(72) Inventor: NAREN, Gerile, Shenzhen, Guangdong 518129 (CN); DU, Rui, Shenzhen, Guangdong 518129 (CN); HU, Mengshi, Shenzhen, Guangdong 518129 (CN); HAN, Xiao, Shenzhen, Guangdong 518129 (CN); LI, Yunbo, Shenzhen, Guangdong 518129 (CN)
(74) Representative: Grünecker Patent- und Rechtsanwälte PartG mbB
(86) International application number: PCT/CN2023/118961
(87) International publication number: WO 2024/078255

(57) **Abstract**

This application relates to the communication field, and in particular, to a communication method and apparatus, and a computer-readable storage medium, is applicable to a sensing sensing system, and is further applicable to a system that complies with the IEEE 802.11 system standard, for example, 802.11bf, 802.11a/b/g, 802.11n, 802.11ac, 802.11ax, or a next-generation standard thereof, for example, 802.11be or a further next-generation standard, a wireless personal local area network system based on ultra-wideband UWB, or the like. This application provides a communication method and apparatus. The method includes: A first device sends a first frame to a second device, where the first frame includes a first message, and the first message is used to notify the second device to prepare to receive a sensing measurement result; and the first device performs sensing measurement. According to this application, efficiency of feeding back a DMG SBP report can be improved.

## Description

This application claims priority to Chinese Patent Application No. 202211233672.8, filed with the China National Intellectual Property Administration on October 10, 2022 and entitled "COMMUNICATION METHOD AND APPARATUS, AND COMPUTER-READABLE STORAGE MEDIUM", which is incorporated herein by reference in its entirety.

### TECHNICAL FIELD

This application relates to the field of wireless communication technologies, and in particular, to a communication method and apparatus, and a computer-readable storage medium.

### BACKGROUND

A wireless local area network (wireless local area network, WLAN) sensing (sensing) technology may implement motion detection, gesture recognition, and biometric feature measurement by using a radio signal based on a wireless network and a device. Sensing by proxy (sensing by proxy, SBP) means that an SBP initiator may obtain a sensing measurement result without participating in sensing measurement. The sensing measurement result needs to be sent by an SBP responder to the SBP initiator after the sensing measurement is completed.

For SBP on a Sub-7 GHz frequency band, the SBP initiator is a station (station, STA) of a non-access point (non-access point, non-AP), the SBP responder is an AP, and a sensing responder is a non-AP STA. It may be understood that the AP, serving as an intermediate hub, may schedule the SBP initiator and the sensing responder in a centralized manner. To ensure that the SBP initiator can receive an SBP report sent by the SBP responder, in an SBP setup process, the AP allocates a time window to the SBP initiator based on a request of the SBP initiator, where the time window is used for subsequent sensing measurement, and therefore the SBP initiator may determine time at which sensing measurement occurs, to ensure that when the sensing measurement occurs, the SBP initiator remains in a wake-up or active state, to receive the SBP report.

However, in directional multi-gigabit (directional multi-gigabit, DMG) sensing, the SBP initiator may be a non-AP STA or an AP, and the SBP responder may also be a non-AP STA or an AP. When the SBP responder is a non-AP STA, the SBP responder does not have a control, management, and resource allocation capability of the AP, and is likely to be unable to control time at which sensing measurement occurs. Consequently, measurement time negotiated between the DMG SBP initiator and the DMG SBP responder does not match or is not aligned with time information negotiated between the DMG SBP responder and the sensing responder, and the DMG SBP initiator cannot accurately determine time at which each sensing measurement occurs, namely, time at which the SBP report is received each time. This may cause a problem that the DMG SBP initiator cannot receive, in a timely manner, a sensing measurement result fed back by the DMG SBP responder. Therefore, how to improve efficiency of feeding back the DMG SBP report is an urgent problem to be resolved.

### SUMMARY

Embodiments of this application provide a communication method and apparatus, and a computer-readable storage medium, to improve efficiency of feeding back a DMG SBP report.

According to a first aspect, an embodiment of this application provides a communication method. The communication method is applicable to a first device, a module (for example, a chip or a processor) in the first device, or a logical module or software that can implement all or some functions of the first device. The following uses an example in which the method is performed by the first device for description. The communication method includes: The first device sends a first frame to a second device, where the first frame includes a first message, and the first message is used to notify the second device to prepare to receive a sensing measurement result; and the first device obtains the sensing measurement result.

In this embodiment of this application, before performing sensing measurement, the first device may notify the second device to prepare to receive the sensing measurement result, so that the second device remains in a wake-up or active state, or the second device performs preprocessing work of receiving the sensing measurement result, to receive the sensing measurement result. Therefore, the second device can receive, in a timely manner, the sensing measurement result fed back by the first device. Whether the first device is an AP or a non-AP STA is not limited, and whether the first device is associated with the second device is not limited, so that efficiency and accuracy of feeding back the sensing measurement result can be improved.

In a possible implementation, that the first device obtains the sensing measurement result includes: The first device sends and receives a sensing physical layer protocol data unit (physical layer protocol data unit, PPDU), and performs sensing measurement based on the sensing PPDU to obtain the sensing measurement result. For sensing measurement of a monostatic type, the first device may send and receive the sensing PPDU, and perform the sensing measurement based on the sensing PPDU, to obtain the sensing measurement result.

In a possible implementation, that the first device obtains the sensing measurement result includes: The first device sends a sensing PPDU to a third device, where the third device includes one or more devices; and the first device receives the sensing measurement result from the third device, where the sensing measurement result is determined by the third device based on the sensing PPDU. When the first device serves as a transmitter of the sensing PPDU, and the third device serves as a receiver of the sensing PPDU, the first device may send the sensing PPDU to the third device, and the third device performs the sensing measurement based on the sensing PPDU to obtain the sensing measurement result, and sends the sensing measurement result to the first device.

In a possible implementation, that the first device obtains the sensing measurement result includes: The first device receives a sensing PPDU from a third device; and the first device performs sensing measurement based on the sensing PPDU, to obtain the sensing measurement result. When the first device serves as a receiver of the sensing PPDU and the third device serves as a transmitter of the sensing PPDU, the third device may send the sensing PPDU to the first device, and the first device performs the sensing measurement based on the sensing PPDU to obtain the sensing measurement result.

In a possible implementation, the sensing measurement includes at least one instance group, and each instance group in the at least one instance group includes one or more instances. Each of the one or more instances includes: obtaining the sensing PPDU, and performing the sensing measurement based on the sensing PPDU, to obtain the sensing measurement result.

In a possible implementation, that the first device sends a first frame to a second device includes: The first device sends the first frame to the second device per instance before each instance starts; or the first device sends the first frame to the second device in a unit of an instance group before each instance group starts.

In a possible implementation, the communication method further includes: The first device sends the sensing measurement result to the second device.

In a possible implementation, that the first device sends the sensing measurement result to the second device includes: The first device sends the sensing measurement result to the second device after each instance ends; or the first device sends the sensing measurement result to the second device after each instance group ends.

In a possible implementation, that the first device sends the sensing measurement result to the second device after each instance ends includes: The first device sends, by using a frame that corresponds to each instance and that is used to feed back a DMG SBP report, the sensing measurement result corresponding to the instance to the second device.

In a possible implementation, that the first device sends the sensing measurement result to the second device after each instance group ends includes: The first device sends, by using a frame that corresponds to a last instance in each instance group and that is used to feed back a DMG SBP report, sensing measurement results corresponding to all instances in the instance group to the second device; or the first device sends, by using a frame that corresponds to a first instance in a next instance group and that is used to feed back a DMG SBP report, sensing measurement results corresponding to all instances in the instance group to the second device.

In a possible implementation, the performing sensing measurement includes: The first device performs the sensing measurement when receiving a second frame from the second device.

In a possible implementation, the communication method further includes: The first device receives a DMG SBP request frame from the second device, where the DMG SBP request frame is used to request the second device to establish SBP with the first device; and the first device sends a DMG SBP response frame to the second device, where the DMG SBP response frame indicates that the first device successfully establishes DMG SBP with the second device.

In a possible implementation, the communication method further includes: The first device sends a DMG measurement setup request frame to the third device, where the DMG measurement setup request frame is used to request to establish DMG measurement, and the third device includes one or more devices; and the first device receives a DMG measurement setup response frame from the third device, where the DMG measurement setup response frame indicates that the first device successfully establishes DMG measurement with the third device.

In a possible implementation, the first frame is a DMG sensing request (DMG sensing request) frame or a DMG sensing poll (DMG sensing poll) frame. In the solution provided in this application, the first message may be carried in the DMG sensing request frame or the DMG sensing poll frame, or may be carried in another frame that can implement the function. A type of the frame is not limited in embodiments of this application.

In a possible implementation, the first frame is the DMG sensing request frame, the DMG sensing request frame includes a time division duplex (time division duplex, TDD) beamforming information field, the TDD beamforming information field includes a first field, a DMG measurement setup identifier (identifier, ID) field, a measurement instance group ID field, a sensing instance sequence number (sequence number, SN) field, and a sensing type field, and the first message is determined based on the first field.

In a possible implementation, the first frame is the DMG sensing poll frame, and the DMG sensing poll frame includes a DMG measurement setup ID field, a measurement instance group ID field, and a sensing instance SN field.

According to a second aspect, an embodiment of this application provides a communication method. The communication method is applicable to a first device, a module (for example, a chip or a processor) in the first device, or a logical module or software that can implement all or some functions of the first device. The following uses an example in which the method is performed by the first device for description. The communication method includes: The first device receives a first DMG SBP request frame from a second device, where the first DMG SBP request frame includes first sensing scheduling information; the first device determines that sensing scheduling information of a third device matches the first sensing scheduling information, and sends a first DMG SBP response frame to the second device, where the third device includes one or more devices, and the first DMG SBP response frame indicates that the first device successfully establishes DMG SBP with the second device; or the first device determines that sensing scheduling information of one or more devices in the third device does not match the first sensing scheduling information, and sends a second DMG SBP response frame to the second device, where the second DMG SBP response frame indicates that the first device fails to establish DMG SBP with the second device.

In this embodiment of this application, the second device may learn of the sensing scheduling information of the third device. In this way, the second device may remain in a wake-up or active state within sensing measurement time indicated by the sensing scheduling information of the third device, or perform preprocessing of receiving a sensing measurement result, to receive the sensing measurement result. Therefore, the second device can receive, in a timely manner, the sensing measurement result fed back by the first device. Whether the first device is an AP or a non-AP STA is not limited, and whether the first device is associated with the second device is not limited, so that efficiency and accuracy of feeding back the sensing measurement result can be improved.

In a possible implementation, the communication method further includes: The first device determines that current sensing scheduling information of the one or more devices in the third device does not match the first sensing scheduling information, and sends a DMG SBP termination frame to the second device, where the DMG SBP termination frame indicates that the first device terminates DMG SBP with the second device.

In a possible implementation, the DMG SBP termination frame includes the sensing scheduling information of the third device.

In a possible implementation, the first DMG SBP response frame and/or the second DMG SBP response frame include/includes the sensing scheduling information of the third device, the sensing scheduling information is one or more DMG sensing scheduling subelements, and the DMG sensing scheduling subelement is carried in a DMG sensing measurement setup element.

In a possible implementation, the communication method further includes: The first device receives a second DMG SBP request frame from the second device, where the second DMG SBP request frame includes second sensing scheduling information, and the second sensing scheduling information is determined based on the sensing scheduling information of the third device.

According to a third aspect, an embodiment of this application provides a communication apparatus. The communication apparatus may be used in a first device, a module (for example, a chip or a processor) in the first device, or a logical module or software that can implement all or some functions of the first device. The communication apparatus has a function of implementing behavior in the method example in any one of the first aspect and the second aspect. The function may be implemented by hardware, or may be implemented by hardware executing corresponding software. The hardware or the software includes one or more modules corresponding to the foregoing function. For beneficial effects, refer to the descriptions in the first aspect and the second aspect. Details are not described herein again.

According to a fourth aspect, a communication apparatus is provided. The communication apparatus may be the first device in the foregoing method embodiments, or a chip or a processor disposed in the first device. The communication apparatus may include a processor. The processor is coupled to a memory. The memory is configured to store a program or instructions. When the program or the instructions are executed by the processor, the communication apparatus is enabled to perform the method performed by the first device, or the chip or the processor in the first device in the foregoing method embodiments.

According to a fifth aspect, an embodiment of this application provides a computer-readable storage medium, where the computer-readable storage medium stores a computer program or computer instructions, and when the computer program or the computer instructions are run on a computer, the computer is enabled to perform the method in any one of the first aspect or the possible implementations of the first aspect, or any one of the second aspect or the possible implementations of the second aspect.

According to a sixth aspect, an embodiment of this application provides a computer program product including program instructions. When the computer program product is run on a computer, the computer is enabled to perform the method in any one of the first aspect or the possible implementations of the first aspect, or any one of the second aspect or the possible implementations of the second aspect.

According to a seventh aspect, an embodiment of this application provides a chip system. The chip system includes a processor, configured to implement functions in the foregoing methods. In a possible implementation, the chip system may further include a memory, configured to store program instructions and/or data. The chip system may include a chip, or may include a chip and another discrete component.

According to an eighth aspect, an embodiment of this application provides a communication system. The communication system includes the first device provided in the first aspect or the second aspect, and may further include a second device and a third device. The first device is configured to perform the method in any one of the first aspect or the possible implementations of the first aspect, or any one of the second aspect or the possible implementations of the second aspect.

### BRIEF DESCRIPTION OF DRAWINGS

To describe embodiments of this application more clearly, the following briefly describes accompanying drawings used in embodiments. It is clear that a person of ordinary skill in the art can further obtain other drawings based on these accompanying drawings without creative efforts.
FIG. 1 is a diagram of a radar sensing scenario according to an embodiment of this application;
FIG. 2 is a schematic flowchart of SBP according to an embodiment of this application;
FIG. 3 is a diagram of an instance and an instance group according to an embodiment of this application;
FIG. 4 is a diagram of a network architecture according to an embodiment of this application;
FIG. 5 is a diagram of a scenario of DMG SBP with monostatic according to an embodiment of this application;
FIG. 6 is a diagram of a scenario of DMG SBP with bistatic according to an embodiment of this application;
FIG. 7 is a diagram of a scenario of DMG SBP with multistatic according to an embodiment of this application;
FIG. 8 is a diagram of a scenario of DMG SBP with monostatic with coordination according to an embodiment of this application;
FIG. 9 is a diagram of a scenario of DMG SBP with bistatic with coordination according to an embodiment of this application;
FIG. 10 is an interaction flowchart of a communication method according to an embodiment of this application;
FIG. 11 is a diagram of a structure of a DMG sensing request frame according to an embodiment of this application;
FIG. 12 is a diagram of a structure of a TDD beamforming information field according to an embodiment of this application;
FIG. 13 is a diagram of a structure of another DMG sensing poll frame according to an embodiment of this application;
FIG. 14 is an interaction flowchart of another communication method according to an embodiment of this application;
FIG. 15 is a diagram of a scenario of DMG SBP with monostatic according to an embodiment of this application;
FIG. 16 is a diagram of another scenario of DMG SBP with monostatic according to an embodiment of this application;
FIG. 17 is a diagram of still another scenario of DMG SBP with monostatic according to an embodiment of this application;
FIG. 18 is a diagram of a scenario of DMG SBP with bistatic according to an embodiment of this application;
FIG. 19 is a diagram of another scenario of DMG SBP with bistatic according to an embodiment of this application;
FIG. 20 is a diagram of still another scenario of DMG SBP with bistatic according to an embodiment of this application;
FIG. 21 is a diagram of still another scenario of DMG SBP with bistatic according to an embodiment of this application;
FIG. 22 is a diagram of still another scenario of DMG SBP with bistatic according to an embodiment of this application;
FIG. 23 is a diagram of still another scenario of DMG SBP with bistatic according to an embodiment of this application;
FIG. 24 is a diagram of a scenario of DMG SBP with multistatic according to an embodiment of this application;
FIG. 25 is a diagram of another scenario of DMG SBP with multistatic according to an embodiment of this application;
FIG. 26 is a diagram of a scenario of DMG SBP with monostatic with coordination according to an embodiment of this application;
FIG. 27 is a diagram of a scenario of DMG SBP with monostatic with coordination according to an embodiment of this application;
FIG. 28 and FIG. 29 are diagrams of scenarios of DMG SBP with bistatic with coordination according to an embodiment of this application;
FIG. 30 and FIG. 31 are diagrams of other scenarios of DMG SBP with bistatic with coordination according to an embodiment of this application;
FIG. 32 is an interaction flowchart of still another communication method according to an embodiment of this application;
FIG. 33 is a diagram of a structure of a DMG sensing scheduling subelement according to an embodiment of this application;
FIG. 34 is a diagram of a structure of a DMG sensing measurement setup element according to an embodiment of this application;
FIG. 35 is a diagram of a structure of another DMG sensing scheduling subelement according to an embodiment of this application;
FIG. 36 is a schematic of a structure of a communication apparatus according to an embodiment of this application;
FIG. 37 is a diagram of a structure of another communication apparatus according to an embodiment of this application; and
FIG. 38 is a diagram of a structure of still another communication apparatus according to an embodiment of this application.

### DESCRIPTION OF EMBODIMENTS

The following describes the technical solutions in embodiments of this application with reference to the accompanying drawings in embodiments of this application. The terms "system" and "network" may be used interchangeably in embodiments of this application. Unless otherwise specified, "/" represents an "or" relationship between associated objects. For example, A/B may represent A or B. The term "and/or" in this application is merely an association relationship for describing associated objects, and represents that three relationships may exist. For example, A and/or B may represent the following three cases: Only A exists, both A and B exist, and only B exists, where A and B may be singular or plural. In addition, in descriptions of this application, unless otherwise specified, "a plurality of" means two or more than two. At least one of the following items (pieces) or a similar expression thereof indicates any combination of these items, including a single item (piece) or any combination of a plurality of items (pieces). For example, at least one of a, b, or c may represent a, b, c, a and b, a and c, band c, or a, b, and c, where a, b, and c may be singular or plural. In addition, to clearly describe the technical solutions in embodiments of this application, the terms such as "first" and "second" are used in embodiment of this application to distinguish between same items or similar items that provide basically same network elements or functions. A person skilled in the art may understand that the terms such as "first" and "second" do not limit a quantity or an execution sequence, and the terms such as "first" and "second" do not indicate a definite difference.

Reference to "an embodiment", "some embodiments", or the like described in embodiments of this application indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner.

The objectives, technical solutions, and beneficial effect of this application are further described in detail in the following specific implementations. It should be understood that the following descriptions are merely specific implementations of this application, but are not intended to limit the protection scope of this application. Any modification, equivalent replacement, or improvement made based on technical solutions of this application shall fall within the protection scope of this application.

The following first describes technical terms that may appear in embodiments of this application. Terms used in implementations of this application are merely used to explain specific embodiments of this application, but are not intended to limit this application. In embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

### (1) Sensing

Sensing initiator (sensing initiator): a station that initiates a sensing procedure.

Sensing responder (sensing responder): a station that participates in the sensing procedure initiated by the sensing initiator.

Sensing transmitter (sensing transmitter): a station that sends a PPDU used for sensing measurement in the sensing procedure.

Sensing receiver (sensing receiver): a station that receives the PPDU sent by the sensing transmitter and performs the sensing measurement in the sensing procedure.

Sensing measurement setup (sensing measurement setup): is for the sensing initiator and responder to exchange and unify some parameters, attributes, and the like that need to be used in the sensing procedure, for example, roles of the sensing initiator and responder (for example, the sensing transmitter and the sensing receiver), a measurement feedback type, and other parameters. Each set of parameters is identified by a sensing measurement setup ID (sensing measurement setup ID).

Sensing measurement instance (sensing measurement instance): Sensing measurement is performed in the sensing measurement instance. One sensing measurement instance allows a plurality of sensing responders to join. Each measurement instance is identified by a sensing measurement instance ID (sensing measurement instance ID).

Sensing by proxy initiator (SBP initiator): a station that initiates a sensing by proxy procedure.

Sensing by proxy responder (SBP responder): a station that participates in the sensing by proxy procedure initiated by the sensing by proxy initiator, serving as the sensing by proxy initiator in the sensing by proxy procedure.

### (2) Radar sensing

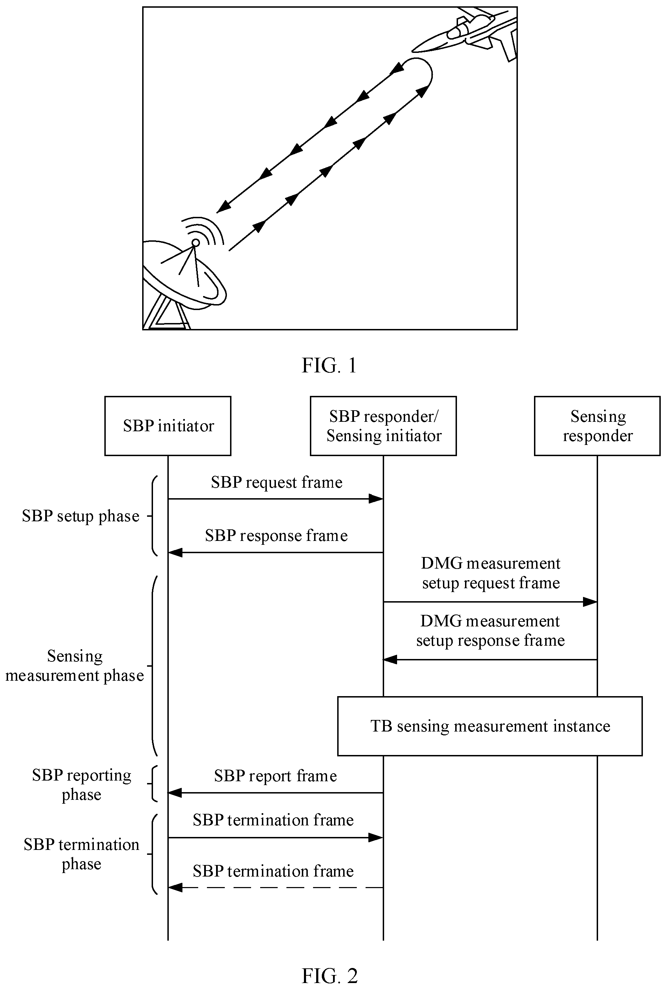

FIG. 1 is a diagram of a radar sensing scenario according to an embodiment of this application. The radar sensing is a radio sensing technology. As shown in FIG. 1, a radar includes a transmit antenna and a receive antenna. The transmit antenna sends an electromagnetic wave. When the electromagnetic wave reaches a target, the electromagnetic wave is reflected, and a reflected wave is received by the receive antenna. A radar system analyzes characteristic information of the target, such as a position, a shape, and a motion characteristic, through signal processing based on changes of a transmitted wave and a received wave. The radar sensing has many unique advantages. For example, a radar is not affected by light, and has a capability of penetrating an obstacle, so that personal privacy can be better protected. A radar sensing range is longer, which does not cause harm to people and animals. An advantage of using the radar technology to realize sensing is mainly reflected in detection of motion. Doppler effect of a target echo is used to observe and interpret a motion status of the target, like a motion direction and speed.

Introduction of the sensing technology in a WLAN has a good prospect. A wireless fidelity sensing (Wi-Fi sensing) technology can be used in different scenarios. For example, in sports, this technology can be used to detect motion statuses of people and balls. In home environments, this technology can be used for human fall detection to prevent the elderly from falling, and can interpret a human motion status by processing channel state information (channel state information, CSI). The radio sensing technology makes full use of existing WLAN resources without high costs. In a future densely deployed WLAN, there are a plurality of STAs in a coverage area of one AP, and the AP may perform appropriate resource scheduling for each STA to improve a system throughput, robustness, and the like.

### (3) Millimeter wave sensing

A wireless sensing protocol, namely, the IEEE 802.11bf protocol, supports in implementing sensing on a sub-7 GHz band and a millimeter wave band (60 GHz). On the sub-7 GHz frequency band, sensing is to detect a radio channel and estimate CSI, to implement action identification, motion identification, and fall detection, and the like. On the 60 GHz frequency band, sensing is to obtain target status information and environment information by performing directional beam scanning on an environment to obtain a range doppler map (range doppler map, RD Map). A phase of a transmit antenna is adjusted, so that energy of a radio signal forms a directional (or directional) beam (beam) in a specific direction. A beam width of the directional beam is narrow, and energy is more concentrated. Therefore, the directional beam has a high antenna gain, and can reduce interference to another received signal.

In the IEEE 802.11bf protocol, one sensing session is initiated by one sensing initiator and participated by one or more sensing responders. The protocol defines five types of high-frequency sensing: monostatic (monostatic), bistatic (bistatic), multistatic (multistatic), monostatic with coordination (monostatic with coordination), and bistatic with coordination (bistatic with coordination) respectively.

The high-frequency sensing in embodiments of this application may be DMG sensing defined in the IEEE 802.11bf protocol. The high-frequency sensing in the IEEE 802.11bf protocol may depend on the IEEE 802.11ad protocol and the IEEE 802.11ay protocol. The IEEE 802.11ad protocol is also referred to as a directional multi-gigabit (directional multi-gigabit, DMG) protocol, and the IEEE 802.11ay protocol is also referred to as an enhanced directional multi-gigabit (enhanced directional multi-gigabit, EDMG) protocol. For the DMG sensing, when the sensing initiator and the sensing responder are a same device, it may be referred to as self-sending and self-receiving; and when the sensing initiator and the sensing responder are different devices, it may be referred to as receiving and sending separation.

### (4) Sensing by proxy (SBP)

The sensing by proxy means that a non-AP STA can request an AP to perform WLAN sensing and make the AP feed back a sensing result. The non-AP STA that initiates an SBP procedure is referred to as an SBP initiator. The AP that serves as a proxy (proxy) and participates in the SBP is referred to as an SBP responder. In addition, the AP is also a sensing initiator of the SBP sensing procedure.

In the IEEE 802.11bf protocol, for a procedure of performing SBP on the sub-7 GHz frequency band, refer to FIG. 2. FIG. 2 is a diagram of an SBP procedure according to an embodiment of this application. As shown in FIG. 2, the SBP procedure may include four phases.

SBP setup (SBP setup) phase: An SBP initiator sends an SBP request (SBP request) frame to an SBP responder. The frame may include a configuration parameter related to the SBP procedure. After receiving the SBP request frame, the SBP responder may send an SBP response frame to the SBP initiator. If the configuration parameter meets setting of the SBP responder, the SBP response frame may indicate that an SBP request is accepted and SBP is successfully established. Otherwise, the SBP response frame may indicate that the SBP request is rejected and the SBP fails to be established.

Sensing measurement phase: After the SBP is successfully established, the SBP responder, as a sensing initiator, initiates a sensing procedure to one or more sensing responders. The sensing procedure includes a sensing measurement setup (sensing measurement setup) phase and a sensing measurement instance (sensing measurement instance) phase. The sensing measurement setup phase includes: The sensing initiator sends a DMG measurement setup request frame to the sensing responder, and the sensing responder sends a DMG measurement setup response frame to the sensing initiator. The sensing measurement performed on the sub-7 GHz frequency band may be trigger-based (trigger-based, TB) sensing measurement.

SBP reporting (SBP reporting) phase: After obtaining a sensing measurement result, the SBP responder feeds back the result to the SBP initiator through an SBP report frame.

SBP termination (SBP termination) phase: The SBP can be terminated by either the SBP initiator or the SBP responder by sending an SBP termination frame.

### (5) DMG sensing measurement

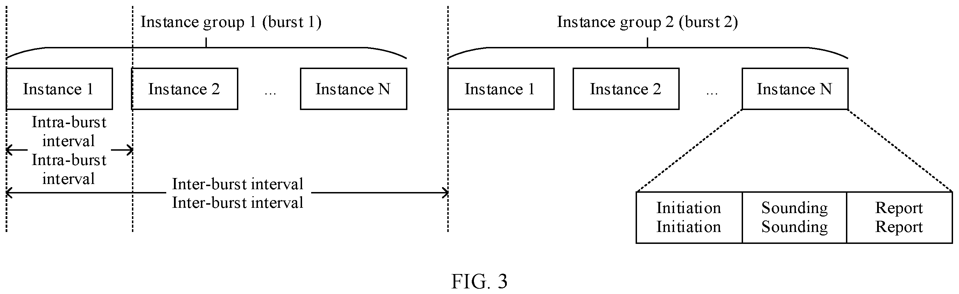

In the IEEE 802.11bf protocol, the DMG sensing measurement is implemented in a DMG sensing measurement instance (DMG sensing measurement instance). It is specified in the protocol that a plurality of instances (instances) form an instance group (instance group, burst for short), and an intra-burst interval (intra-burst interval) between instances and an inter-burst interval (inter-burst interval) between instance groups are specified. FIG. 3 is a diagram of an instance and an instance group according to an embodiment of this application. As shown in FIG. 3, each measurement instance may include three phases: an initiation (initiation) phase (setting a parameter related to current measurement), a sounding (sounding) phase (sending a sensing PPDU for measurement), and a report (report) phase (feeding back a measurement result).

Not every DMG sensing type of measurement includes three phases, and a monostatic type and a bistatic type do not have an initiation phase. Sensing measurement occurs at a device end that receives the sensing PPDU. If the sensing measurement occurs at a sensing responder, the sensing responder needs to feed back a measurement result to a sensing initiator. If the sensing measurement occurs at the sensing initiator, the result does not need to be fed back.

It should be understood that embodiments of this application are applicable to a sensing sensing system, applicable to a system that complies with an IEEE 802.11 system standard, for example, 802.11bf, 802.11a/b/g, 802.11n, 802.11ac, 802.11ax, or a next generation thereof, for example, 802.11be, Wi-Fi 7, or EHT, or a further next generation thereof, for example, a wireless local area network system that complies with an 802.11 series protocol, for example, Wi-Fi 8, UHR, or Wi-Fi AI, or a wireless personal area network system based on ultra-wideband UWB, or applicable to a wireless local area network (wireless local area network, WLAN) scenario. Alternatively, embodiments of this application are applicable to a wireless local area network system, for example, an internet of things (internet of things, IoT) network or a vehicle to X (vehicle to X, V2X) network. Certainly, embodiments of this application are further applicable to another possible communication system, for example, a long term evolution (long term evolution, LTE) system, an LTE frequency division duplex (frequency division duplex, FDD) system, LTE time division duplex (time division duplex, TDD), a universal mobile telecommunications system (universal mobile telecommunications system, UMTS), a worldwide interoperability for microwave access (worldwide interoperability for microwave access, WiMAX) communication system, and a future 6G communication system.

The following uses an example in which embodiments of this application are applicable to a WLAN scenario. It should be understood that the WLAN starts from the 802.11a/g standard, and develops to 802.11n, 802.11ac, 802.11ax, and 802.11be and Wi-Fi 8 that are currently being discussed. 802.11n can also be referred to as high throughput (high throughput, HT), 802.11ac can also be referred to as very high throughput (very high throughput, VHT), 802.11ax can also be referred to as high efficiency (high efficiency, HE) or Wi-Fi 6, and 802.11be can also be referred to as extremely high throughput (extremely high throughput, EHT) or Wi-Fi 7. Standards before HT, such as 802.11a/b/g, are collectively referred to as non-high throughput (non-HT).

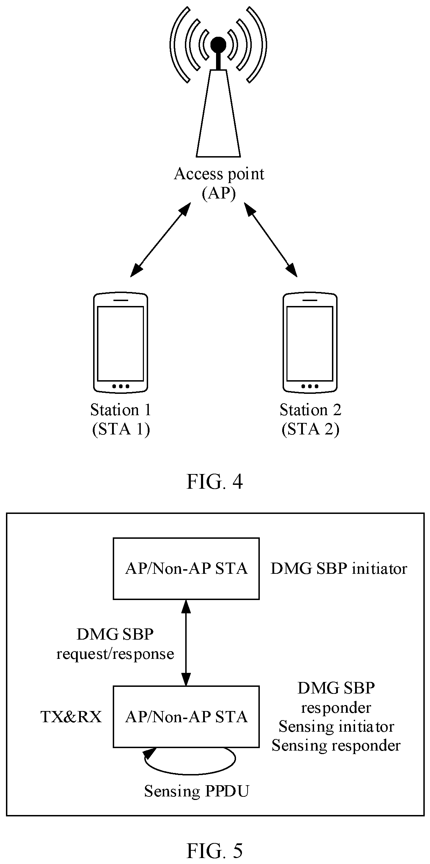

FIG. 4 is a diagram of a network architecture according to an embodiment of this application. As shown in FIG. 4, an example in which the network architecture includes one wireless access point AP and two stations is used for description. The STA associated with the AP can receive a radio frame sent by the AP, and can also send a radio frame to the AP. In addition, embodiments of this application are also applicable to communication between APs. For example, the APs may communicate with each other by using a distributed system (distributed system, DS). Embodiments of this application are also applicable to communication between STAs. It should be understood that quantities of APs and STAs in FIG. 1 are merely an example. There may be more or less APs and STAs.

The STA in embodiments of this application is an apparatus having a wireless communication function, supports communication according to a WLAN protocol, and has a capability of communicating with another station or the access point in the WLAN network. In a WLAN system, the station may be referred to as a non-access point station (non-access point station, non-AP STA). For example, the STA is any user communication device that allows a user to communicate with an AP and further communicate with a WLAN. The apparatus may be an entire device, or may be a chip or a processing system installed in the entire device. The device in which the chip or the processing system is installed may implement the method and the function in embodiments of this application under control of the chip or the processing system. For example, the STAs may be various user terminals, user apparatuses, access apparatuses, subscriber stations, subscriber units, mobile stations, user agents, user devices, or other names that have a wireless communication function. The user terminal may include various handheld devices, vehicle-mounted devices, wearable devices, computing devices, or other processing devices connected to a wireless modem that have a wireless communication function; and various forms of user equipment (user equipment, UE), mobile stations (mobile stations, MSs), terminals (terminals), terminal equipment (terminal equipment), portable communication devices, handheld devices, portable computing devices, entertainment devices, game devices or systems, global positioning system devices, any other suitable device configured to perform network communication through a wireless medium, or the like. For example, the STA may be a router, a switch, a bridge, or the like. Herein, for ease of description, the devices mentioned above are collectively referred to as stations or STAs.

The access point (for example, an AP) in embodiments of this application is an apparatus having a wireless communication function, supports communication according to a WLAN protocol, has a function of communicating with another device (for example, a station or another access point) in a WLAN network, and certainly, may further have a function of communicating with another device. In the WLAN system, the access point may be referred to as an access point station (AP STA). The apparatus may be an entire device, or may be a chip or a processing system installed in the entire device. The device in which the chip or the processing system is installed may implement the method and the function in embodiments of this application under control of the chip or the processing system. The AP in embodiments of this application may be an apparatus that provides a service for the STA, and may support 802.11 series protocols. For example, the AP may be a communication entity like a communication server, a router, a switch, or a bridge. The AP may include a macro base station, a micro base station, a relay station, and the like in various forms. Certainly, the AP may alternatively be a chip and a processing system in these devices in various forms, to implement the method and the function in embodiments of this application.

The AP and the STA in embodiments of this application may be an AP and a STA that are applicable to an IEEE 802.11 system standard. The AP is an apparatus that is deployed in a wireless communication network and that provides a wireless communication function for a STA associated with the AP. The AP may be used as a center of the communication system, and is usually a network-side product that supports MAC and PHY in the 802.11 system standard, for example, may be a communication device like a base station, a router, a gateway, a repeater, a communication server, a switch, or a bridge. The base station may include a macro base station, a micro base station, a relay station, or the like in various forms. Herein, for ease of description, the devices mentioned above are collectively referred to as an AP. The STA is usually a terminal product that supports a media access control (media access control, MAC) layer and a physical (physical, PHY) layer in the 802.11 system standard, for example, a mobile phone or a notebook computer.

The WLAN system can provide high-speed and low-latency transmission. With continuous evolution of WLAN application scenarios, the WLAN system is applied to more scenarios or industries, for example, the internet of things industry, the vehicle to X industry, the banking industry, enterprise offices, exhibition halls of stadiums, concert halls, hotel rooms, dormitories, wards, classrooms, supermarkets, squares, streets, production workshops, and warehousing. Certainly, a device supporting WLAN communication (for example, an access point or a station) may be a sensor node (for example, a smart water meter, a smart electric meter, or a smart air detection node) in a smart city, a smart device (for example, a smart camera, a projector, a display, a television, a speaker, a refrigerator, or a washing machine) in a smart home, a node and an entertainment terminal (for example, a wearable device such as an AR device or a VR device) in the internet of things, a smart device (for example, a printer, a projector, a loudspeaker, or a speaker) in a smart office, an vehicle to X device in the vehicle to X, infrastructure (for example, a vending machine, a self-service navigation desk of a supermarket, a self-service cashier desk, or a self-service meal-ordering machine) in a daily life scenario, a device in a large-scale stadium and a music hall, or the like. Specific forms of the STA and the AP are not specifically limited in embodiments of this application, and are merely examples for description herein.

Further, a scenario to which this application may be applied may be classified into the following several types based on a DMG sensing type, including DMG SBP with monostatic (DMG SBP with monostatic), DMG SBP with bistatic (DMG SBP with bistatic), DMG SBP with multistatic (DMG SBP with multistatic), DMG SBP with monostatic with coordination (DMG SBP with monostatic with coordination), DMG SBP with bistatic with coordination (DMG SBP with bistatic with coordination), and the like.

In embodiments of this application, TX may indicate a sensing transmitter, namely, a device that sends a sensing PPDU; and RX may indicate a sensing receiver, namely, a device that receives the sensing PPDU. A unified description is provided herein, and details are not described subsequently.

For example, FIG. 5 is a diagram of a scenario of DMG SBP with monostatic according to an embodiment of this application. As shown in FIG. 5, in the scenario of the DMG SBP with monostatic, a sensing initiator is also a sensing responder, and receives a sensing PPDU sent by the sensing initiator to perform sensing measurement, namely, self-sending and self-receiving, and then performs the sensing measurement.

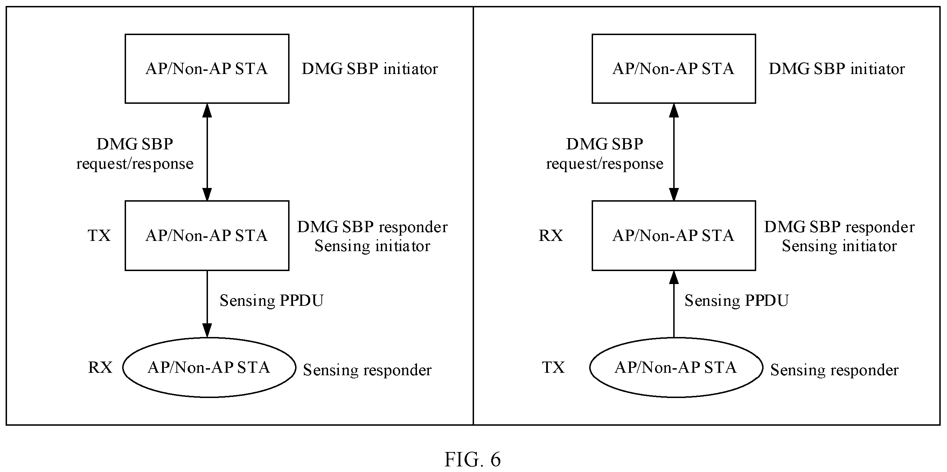

FIG. 6 is a diagram of a scenario of DMG SBP with bistatic according to an embodiment of this application. As shown in FIG. 6, in the scenario of the DMG SBP with bistatic, a sensing initiator and a sensing responder send and receive a sensing PPDU respectively, that is, the sensing initiator may send the sensing PPDU to the sensing responder, and the sensing responder performs sensing measurement.

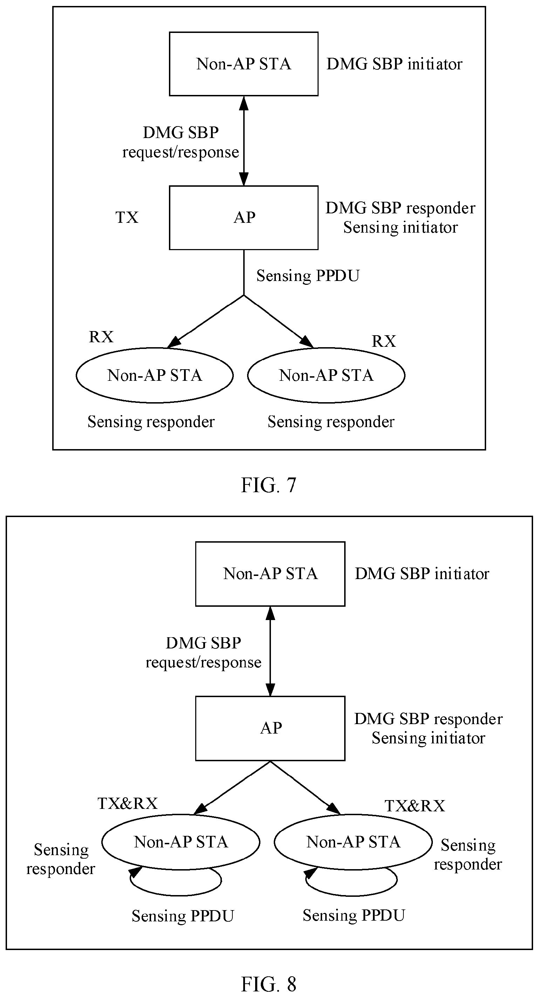

FIG. 7 is a diagram of a scenario of DMG SBP with multistatic according to an embodiment of this application. As shown in FIG. 7, in the scenario of the DMG SBP with multistatic, a sensing initiator may send one sensing PPDU to more than one sensing responder, namely, a single-transmitter and multi-receiver, and the plurality of sensing responders perform sensing measurement.

FIG. 8 is a diagram of a scenario of DMG SBP with monostatic with coordination according to an embodiment of this application. As shown in FIG. 8, in the scenario of the DMG SBP with monostatic with coordination, a sensing initiator may make one or more sensing responders perform self-sending and self-receiving sensing measurement. Optionally, a DMG SBP initiator may request the sensing initiator to perform self-sending and self-receiving sensing measurement.

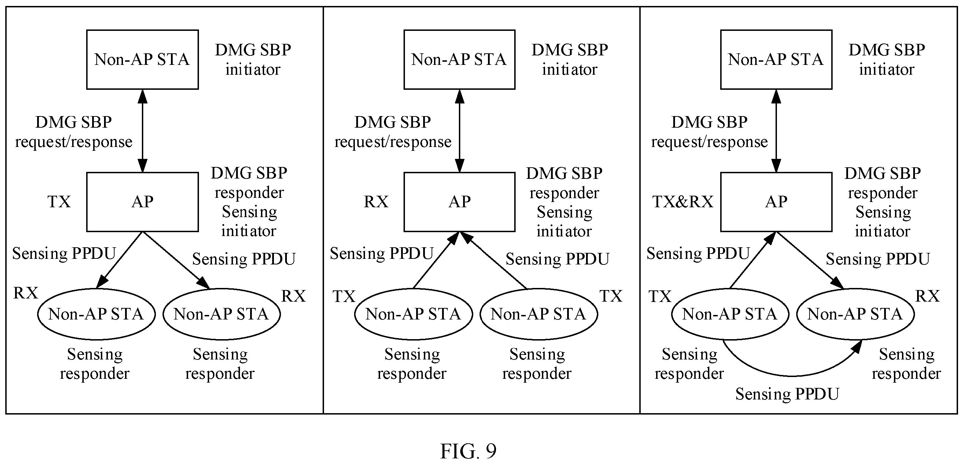

FIG. 9 is a diagram of a scenario of DMG SBP with bistatic with coordination according to an embodiment of this application. As shown in FIG. 9, in the scenario of the DMG SBP with bistatic with coordination, a sensing initiator and a plurality of sensing responders perform one-sending one-receiving sensing measurement. Generally, sensing measurement is performed between a sensing initiator and a sensing responder. It should be noted that, in a scenario with bistatic with coordination, there is sensing measurement performed between sensing responders, to be specific, a sensing responder serving as TX sends a sensing PPDU to another sensing responder serving as RX, and the latter performs sensing measurement, and then feeds back a measurement result to the sensing initiator.

To facilitate understanding of embodiments of the present invention, the following first describes a plurality of technical solutions currently included in implementation of the SBP. The following provides descriptions by using examples.

In an SBP procedure, an SBP initiator may obtain a sensing measurement result without participating in sensing measurement. The sensing measurement result needs to be sent by an SBP responder to the SBP initiator after the sensing measurement is completed.

For SBP on a Sub-7 GHz frequency band, the SBP initiator is a non-AP STA, the SBP responder is an AP, and a sensing responder is a non-AP STA. It may be understood that the AP, serving as an intermediate hub, may schedule the SBP initiator and the sensing responder in a centralized manner. To ensure that the SBP initiator can receive an SBP report sent by the SBP responder, in an SBP setup procedure, the AP allocates a time window to the SBP initiator based on a request of the SBP initiator, where the time window is used for subsequent sensing measurement, and therefore the SBP initiator may determine time at which sensing measurement occurs, to ensure that when the sensing measurement occurs, the SBP initiator remains in a wake-up or active state, or the SBP initiator performs preprocessing of receiving a sensing measurement result, to receive the SBP report.

However, in DMG sensing, the SBP initiator may be a non-AP STA or an AP, and the SBP responder may also be a non-AP STA or an AP. When the SBP responder is a non-AP STA, the SBP responder does not have a control, management, and resource allocation capability of the AP. As a result, measurement time (including information such as a measurement periodicity and a frequency) negotiated between the DMG SBP initiator and the DMG SBP responder may not match or be aligned with time information negotiated between the DMG SBP responder and the sensing responder, the DMG SBP initiator cannot accurately determine time at which each sensing measurement occurs, and cannot determine time at which each SBP report is received. Even if the SBP responder is an AP, the AP allocates sensing measurement time based on a local clock of the AP, and a device associated with the AP periodically performs clock synchronization with the AP. If the non-AP STA and the AP are not associated, clocks of the non-AP STA and the AP may be asynchronous or not aligned. Therefore, when the DMG SBP initiator and the DMG SBP responder are in a non-associated state, because clocks of the DMG SBP initiator and the DMG SBP responder are not aligned, time at which sensing measurement occurs may be different for the two devices, and the DMG SBP initiator incorrectly determines measurement time. As a result, the SBP report is incorrect.

Based on a problem that the DMG SBP initiator may not receive, in a timely manner, the sensing measurement result fed back by the DMG SBP responder, an embodiment of this application provides a communication method, so that the DMG SBP initiator can receive, in a timely manner, the sensing measurement result fed back by the DMG SBP responder. In addition, whether the DMG SBP initiator is an AP or a non-AP STA is not limited, and whether the DMG SBP initiator is associated with the DMG SBP responder is not limited, so that efficiency and accuracy of feeding back a DMG SBP report can be improved.

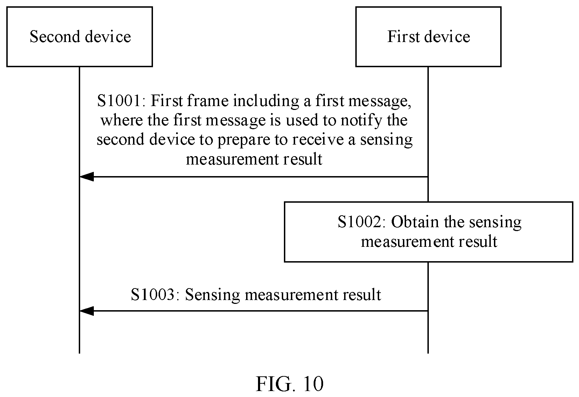

FIG. 10 is an interaction flowchart of a communication method according to an embodiment of this application. In FIG. 10, an example in which a first device and a second device are used as execution bodies of an interaction diagram is used to illustrate the method. However, the execution bodies of the interaction diagram are not limited in this application. For example, the first device in FIG. 10 may be a chip, a chip system, or a processor that supports the first device in implementing the method, or may be a logical module or software that can implement all or some functions of the first device. The second device in FIG. 10 may be a chip, a chip system, or a processor that supports the second device in implementing the method, or may be a logical module or software that can implement all or some functions of the second device. The first device, the second device, and a third device may be APs or non-AP STAs. The first device may be a DMG SBP responder and a DMG sensing initiator. The second device may be a DMG SBP initiator. The third device may be a DMG sensing responder. As shown in FIG. 10, the communication method includes but is not limited to the following steps.

S1001: The first device sends a first frame including a first message to the second device, where the first message is used to notify the second device to prepare to receive a sensing measurement result. Correspondingly, the second device receives the first frame from the first device.

That the first message may be used to notify the second device to prepare to receive a sensing measurement result may also be understood that the first message is used to notify the second device that the first device starts or is about to start sensing measurement. Optionally, the first message may further include information such as time of current sensing measurement and time that the second device needs to wait.

The first frame may include the first message, and may further include information such as a quantity of devices participating in the current sensing measurement (for example, a quantity of sensing responders participating in the current sensing measurement) and a quantity of PPDUs.

The first frame may be a DMG sensing request (DMG sensing request) frame or a DMG sensing poll (DMG sensing poll) frame. In this embodiment, the first message may be carried in the DMG sensing request frame or the DMG sensing poll frame, or may be carried in another frame that can implement the function. A type of the frame is not limited in embodiments of this application.

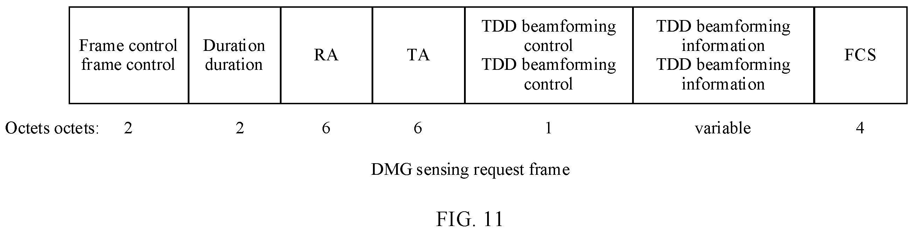

For example, the first frame may be a DMG sensing request frame. FIG. 11 is a diagram of a structure of a DMG sensing request frame according to an embodiment of this application. As shown in FIG. 11, the DMG sensing request frame may include a TDD beamforming information (TDD beamforming information) field, and may further include a frame control (frame control) field, a receiver address (receiver address, RA) field, a transmitter address (transmitter address, TA) field, a TDD beamforming control (TDD beamforming control) field, and a frame check sequence (frame check sequence, FCS) field.

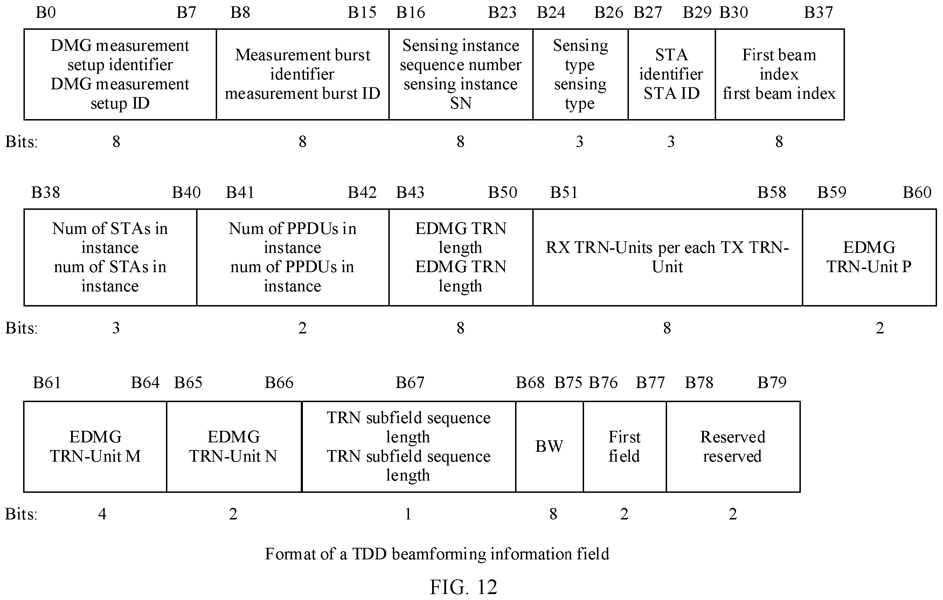

FIG. 12 is a diagram of a structure of a TDD beamforming information field according to an embodiment of this application. As shown in FIG. 12, the TDD beamforming information field may include a first field, a DMG measurement setup ID (DMG measurement setup ID) field, a measurement instance group ID (measurement burst ID) field, a sensing instance SN (sensing instance SN) field, and a sensing type (sensing type) field, and may further include a STAID field, a first beam index (first beam index) field, a num of STAs in instance (num of STAs in instance) field, a num of PPDUs in instance (num of PPDUs in instance) field, an EDMG training (training, TRN) length (EDMG TRN length) field, an RX TRN-Units per Each TX TRN-Unit field, an EDMG TRN-Unit P field, an EDMG TRN-Unit M field, an EDMG TRN-Unit N field, a TRN subfield sequence length (TRN subfield sequence length) field, a bandwidth (bandwidth, BW) field, and a reserved (reserved) field. The first message may be determined by using the first field.

For example, the first field may use two bits B76 and B77, and a value of the first field may be represented as follows: A value 0 indicates that the frame is used to notify the second device to prepare to receive a sensing measurement result, and a corresponding sensing type is a sensing type indicated in B24 to B26; a value 1 indicates that the frame is used to notify the second device to prepare to receive a sensing measurement result, and a corresponding sensing type is monostatic; a value 2 indicates that the frame is used to notify the second device to prepare to receive a sensing measurement result, and a corresponding sensing type is bistatic; and a value 3 is a reserved value.

It should be noted that, when the sensing type is a monostatic type or a bistatic type, the TDD beamforming information field includes at least information about B0 to B26. For a multistatic type, a monostatic coordination type, and a bistatic coordination type, the TDD beamforming information field may further include information about B27 to B29 and B38 to B42. Optionally, B24 to B26 may indicate three types: a multistatic type, a bistatic coordination type, and a monostatic coordination type, and other two types: monostatic and bistatic may be indicated by B76 and B77.

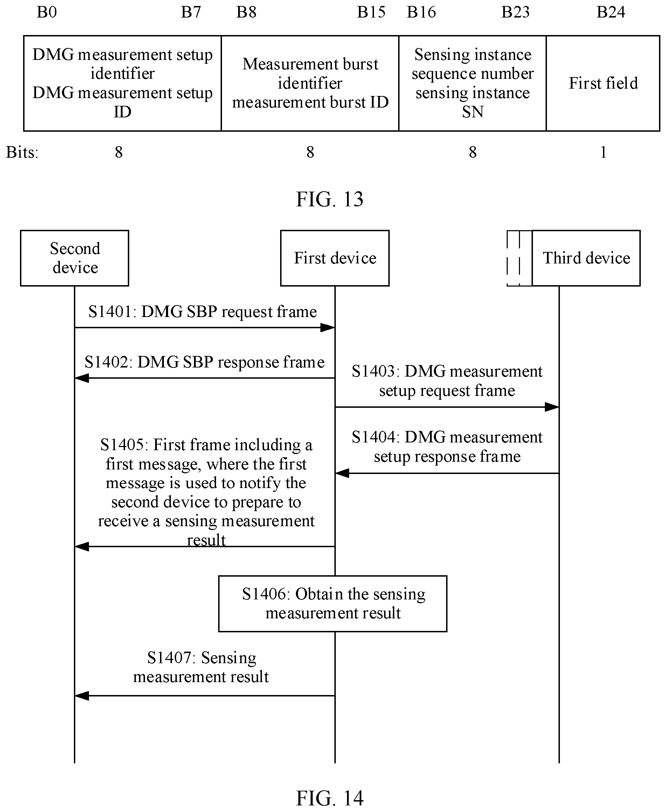

For example, the first frame may be a DMG sensing poll frame. For a diagram of a structure of the DMG sensing poll frame, refer to FIG. 11. For a diagram of a structure of the TDD beamforming information field, refer to FIG. 13. FIG. 13 is a diagram of a structure of another DMG sensing poll frame according to an embodiment of this application. As shown in FIG. 13, the TDD beamforming information field may include a first field, a DMG measurement setup ID (DMG measurement setup ID) field, a measurement instance group ID (measurement burst ID) field, and a sensing instance SN (sensing instance SN) field. For example, the first field may use the B24 bit, and a value of the B24 bit may be represented as follows: A value 1 indicates that the frame is used to notify the second device to prepare to receive a sensing measurement result; otherwise, the value is 0.

S1002: The first device obtains the sensing measurement result.

After sending the first frame to the second device, the first device may obtain sensing measurement.

Further, optionally, when receiving a second frame from the second device, the first device may obtain the sensing measurement result. The second frame may be understood as a response frame of the first frame. For example, the first frame is a DMG sensing request frame, and the second frame is a DMG sensing response frame; or the first frame is a DMG sensing poll frame, and the second frame is a DMG sensing poll response frame. It may be understood that the second frame may alternatively be another frame that can implement the function, and a name of the second frame may not be limited to these names.

Further, optionally, if the first device does not receive the second frame from the second device after sending the first frame, the first device may obtain the sensing measurement result in two manners. In a possible implementation, the first device continues to obtain the sensing measurement result, stores the sensing measurement result, and may feed back the sensing measurement result together when receiving the second frame subsequently. In another possible implementation, the first device stops obtaining the sensing measurement result, and resends the first frame after a preset time period. The preset time period may be 1s, 2s, 5s, or the like. The preset time period is not limited in this embodiment.

An implementation in which the first device obtains the sensing measurement result may be any one of the following.

Manner 1: The first device may send and receive a sensing PPDU, and perform sensing measurement based on the sensing PPDU to obtain the sensing measurement result. For example, in a scenario of DMG SBP with monostatic.

Manner 2: The first device serves as a transmitter of the sensing PPDU, and the third device serves as a receiver of the sensing PPDU. To be specific, the first device sends the sensing PPDU to the third device, and the third device performs sensing measurement based on the sensing PPDU, to obtain the sensing measurement result, and sends the sensing measurement result to the first device. The third device includes one or more devices.

Manner 3: The first device serves as a receiver of the sensing PPDU, and the third device serves as a transmitter of the sensing PPDU. To be specific, the first device receives the sensing PPDU from the third device, and performs sensing measurement based on the sensing PPDU to obtain the sensing measurement result.

S1003: The first device sends the sensing measurement result to the second device. Correspondingly, the second device receives the sensing measurement result from the first device.

The sensing measurement in this embodiment may include at least one instance group, and each instance group includes one or more instances. Each instance may include: obtaining the sensing PPDU, and performing sensing measurement based on the sensing PPDU to obtain the sensing measurement result.

An implementation in which the first device sends the first frame to the second device may be any one of the following.

Manner 1: The first device sends the first frame to the second device per instance before each instance starts.

Manner 2: The first device sends the first frame to the second device per instance group before each instance group starts.

An implementation in which the first device sends the sensing measurement result to the second device may be any one of the following.

Manner 1: The first device sends the sensing measurement result to the second device after each instance ends. For example, the first device may send, by using a frame that corresponds to each instance and that is used to feed back a DMG SBP report, the sensing measurement result corresponding to the instance to the second device.

Manner 2: The first device sends the sensing measurement result to the second device after each instance group ends. For example, the first device may send, by using a frame that corresponds to a last instance in each instance group and that is used to feed back a DMG SBP report, sensing measurement results corresponding to all instances in the instance group to the second device; or for example, the first device sends, by using a frame that corresponds to a first instance in a next instance group and that is used to feed back a DMG SBP report, sensing measurement results corresponding to all instances in the instance group to the second device.

In this embodiment, before performing sensing measurement, the first device may notify the second device to prepare to receive the sensing measurement result, so that the second device remains in a wake-up or active state, or the second device performs preprocessing work of receiving the sensing measurement result, to receive the sensing measurement result. Therefore, the second device can receive, in a timely manner, the sensing measurement result fed back by the first device. Whether the first device is an AP or a non-AP STA is not limited, and whether the first device is associated with the second device is not limited, so that efficiency and accuracy of feeding back the sensing measurement result can be improved.

Based on FIG. 10, FIG. 14 is an interaction flowchart of another communication method according to an embodiment of this application. In FIG. 14, an example in which a first device, a second device, and a third device are used as execution bodies of an interaction diagram is used to illustrate the method. However, the execution bodies of the interaction diagram are not limited in this application. For example, the first device in FIG. 14 may be a chip, a chip system, or a processor that supports the first device in implementing the method, or may be a logical module or software that can implement all or some functions of the first device. The second device in FIG. 14 may be a chip, a chip system, or a processor that supports the second device in implementing the method, or may be a logical module or software that can implement all or some functions of the second device. The third device in FIG. 14 may be a chip, a chip system, or a processor that supports the third device in implementing the method, or may be a logical module or software that can implement all or some functions of the third device. The first device, the second device, and the third device may be APs or non-AP STAs. The first device may be a DMG SBP responder and a DMG sensing initiator. The second device may be a DMG SBP initiator. The third device may be a DMG sensing responder. As shown in FIG. 14, the communication method includes but is not limited to the following steps.

S1401: The second device sends a DMG SBP request frame to the first device. Correspondingly, the first device receives the DMG SBP request frame from the second device.

S1402: The first device sends a DMG SBP response frame to the second device. Correspondingly, the second device receives the DMG SBP response frame from the first device.

Steps S1401 and S1402 may be understood as a DMG SBP setup phase. To be specific, the second device (a DMG SBP initiator) sends the DMG SBP request (DMG SBP request) frame to the first device (a DMG SBP responder). The frame may include a configuration parameter related to a DMG SBP procedure. After receiving the DMG SBP request frame, the first device may send the DMG SBP response frame to the second device. If the configuration parameter meets setting of the first device, the DMG SBP response frame may indicate that a DMG SBP request is accepted, and DMG SBP is successfully established. Otherwise, the DMG SBP response frame may indicate that the DMG SBP request is rejected, and the DMG SBP fails to be established.

S1403: The first device sends a DMG measurement setup request frame to the third device. Correspondingly, the third device receives the DMG measurement setup request frame from the first device.

S1404: The third device sends a DMG measurement setup response frame to the first device. Correspondingly, the first device receives the DMG measurement setup response frame from the third device.

Steps S1403 and S1404 may be understood as a sensing measurement phase. After the DMG SBP is successfully established, the first device (a sensing initiator) initiates sensing measurement setup (sensing measurement setup) to the third device (a sensing responder). The sensing measurement setup phase includes: The first device sends the DMG measurement setup request frame to the third device, and the third device sends the DMG measurement setup response frame to the first device. The third device includes one or more devices.

S1405: The first device sends a first frame including a first message to the second device, where the first message is used to notify the second device to prepare to receive a sensing measurement result. Correspondingly, the second device receives the first frame from the first device.

S1406: The first device obtains the sensing measurement result.

S1407: The first device sends the sensing measurement result to the second device. Correspondingly, the second device receives the sensing measurement result from the first device.

It may be understood that, for implementations of steps S1405 to S1407, refer to the foregoing steps S1001 to S1003. Details are not described herein again.

In addition, implementations of different sensing types are described below by using examples.

### Monostatic (monostatic):

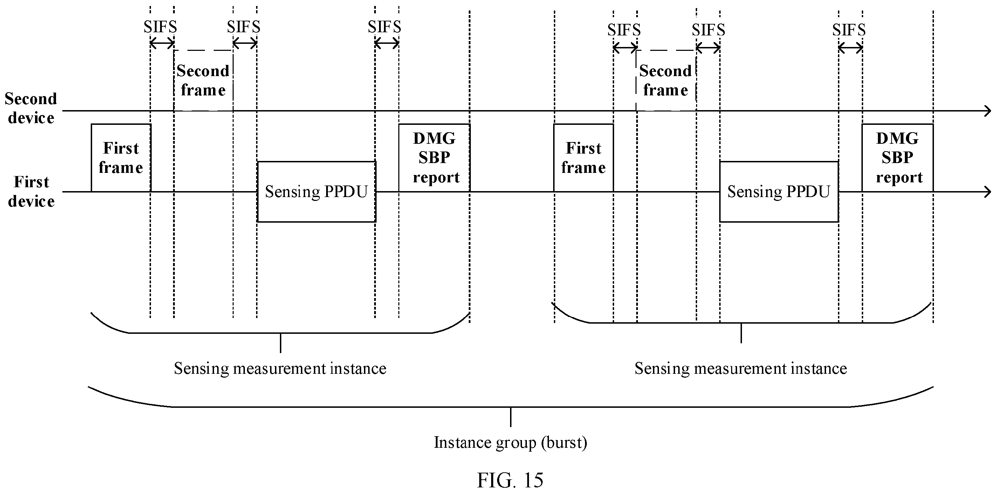

FIG. 15 is a diagram of a scenario of DMG SBP with monostatic according to an embodiment of this application. As shown in FIG. 15, the first device sends the first frame to the second device per instance, in other words, sends the first frame to the second device before each instance starts, and the first device sends the sensing measurement result to the second device per instance, in other words, may send, by using a frame that corresponds to each instance and that is used to feed back a DMG SBP report, the sensing measurement result corresponding to the instance to the second device. Specifically, after the first device and the second device complete setup of the DMG SBP, the first device may perform sensing measurement. For each sensing measurement instance, each time before a sensing PPDU is sent to perform self-sending and self-receiving sensing measurement, the first device may send the first frame to the second device (the DMG SBP initiator). Optionally, when receiving a second frame from the second device, the first device sends and receives a sensing PPDU to perform sensing measurement. After the sensing measurement is completed and the sensing measurement result is obtained, for each sensing measurement instance, the first device may send the sensing measurement result corresponding to the instance to the second device by using the DMG SBP report (DMG SBP report) frame.

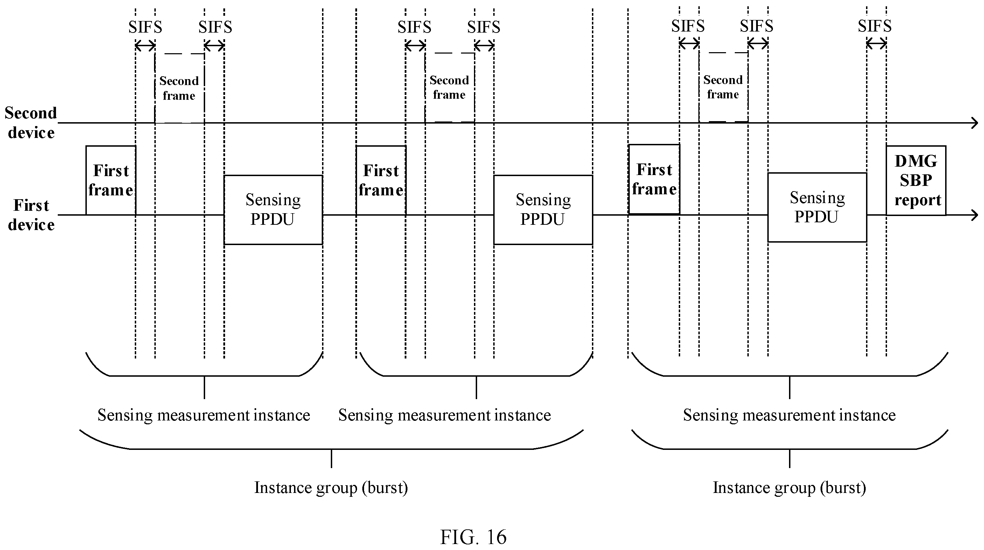

FIG. 16 is a diagram of another scenario of DMG SBP with monostatic according to an embodiment of this application. As shown in FIG. 16, the first device sends the first frame to the second device per instance, in other words, sends the first frame to the second device before each instance starts. The first device sends the sensing measurement result to the second device per instance group, in other words, may send, by using a frame that corresponds to a last instance in each instance group and that is used to feed back the DMG SBP report, sensing measurement results corresponding to all instances in the instance group to the second device, or may send, by using a frame that corresponds to a first instance in a next instance group and that is used to feed back the DMG SBP report, sensing measurement results corresponding to all instances in the instance group to the second device. In FIG. 16, an example in which the first device sends, by using the frame that corresponds to a first instance in a next instance group and that is used to feed back the DMG SBP report, the sensing measurement results corresponding to all instances in the instance group to the second device is used for description. Specifically, after the first device and the second device complete setup of the DMG SBP, the first device may perform sensing measurement. For each sensing measurement instance, each time before a sensing PPDU is sent to perform self-sending and self-receiving sensing measurement, the first device may send the first frame to the second device (the DMG SBP initiator). Optionally, when receiving a second frame from the second device, the first device sends and receives a sensing PPDU to perform sensing measurement. After the sensing measurement is completed and the sensing measurement result is obtained, for each instance group, the first device may send sensing measurement results corresponding to all instances in the instance group to the second device by using a DMG SBP report (DMG SBP report) frame. The DMG SBP report frame may be a DMG SBP report frame corresponding to a last instance in a current instance group, alternatively, the DMG SBP report frame may be a DMG SBP report frame corresponding to a first instance in a next instance group.

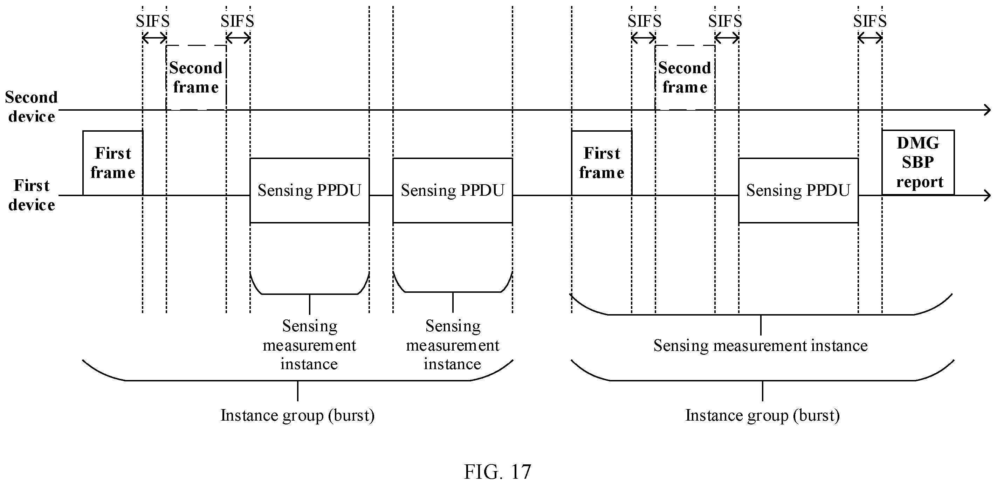

FIG. 17 is a diagram of another scenario of DMG SBP with monostatic according to an embodiment of this application. As shown in FIG. 17, the first device sends the first frame to the second device per instance group, in other words, sends the first frame to the second device before each instance group starts, and the first device sends the sensing measurement result to the second device per instance group, in other words, may send, by using a frame that corresponds to a last instance in each instance group and that is used to feed back the DMG SBP report, sensing measurement results corresponding to all instances in the instance group to the second device, or may send, by using a frame that corresponds to a first instance in a next instance group and that is used to feed back the DMG SBP report, sensing measurement results corresponding to all instances in the instance group to the second device. In FIG. 17, an example in which the first device sends, by using the frame that corresponds to a first instance in a next instance group and that is used to feed back the DMG SBP report, the sensing measurement results corresponding to all instances in the instance group to the second device. For a specific implementation, refer to the descriptions in FIG. 15 and FIG. 16.

### Bistatic (bistatic):

The bistatic type may be classified into two types, that is, the first device serves as a transmitter of a PPDU sensing and the third device serves as a receiver of the PPDU sensing; and the first device serves as a receiver of the PPDU sensing and the third device serves as a transmitter of the PPDU sensing. The sensing PPDU in the bistatic type may be a beam refinement protocol (beam refinement protocol, BRP) frame that carries TRN.

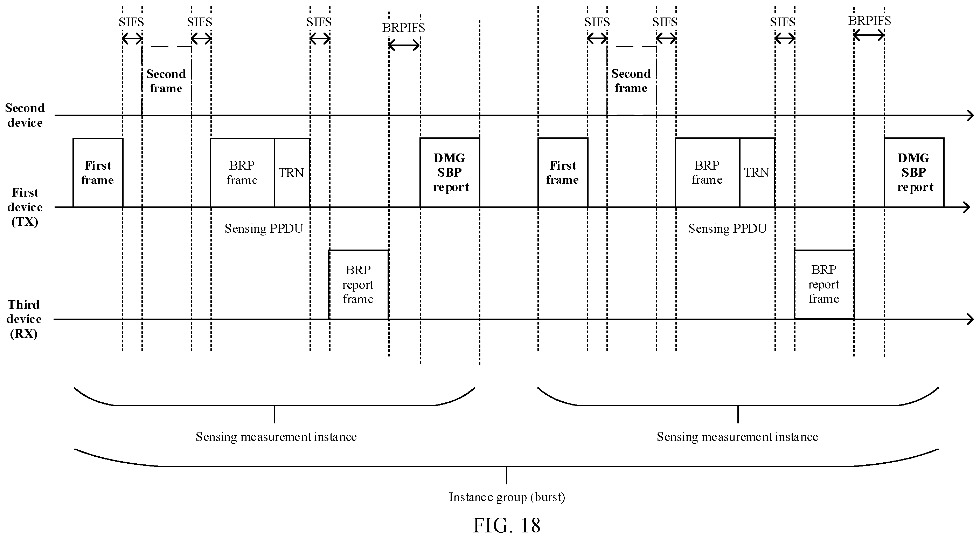

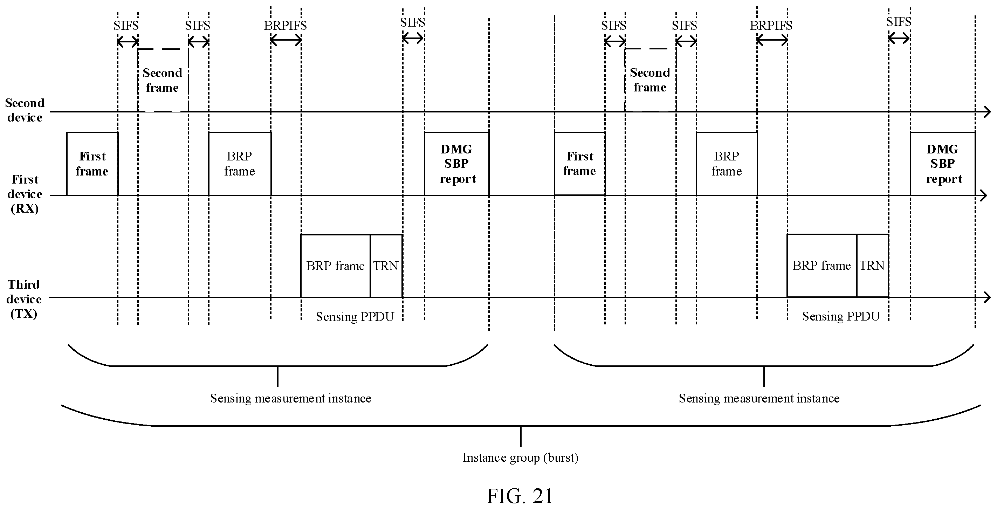

FIG. 18 to FIG. 20 are described below by using an example in which the first device serves as a transmitter of the sensing PPDU and the third device serves as a receiver of the sensing PPDU, and FIG. 21 to FIG. 23 are described by using an example in which the first device serves as a receiver of the sensing PPDU, the third device serves as a transmitter of the sensing PPDU, and the third device includes one device.

FIG. 18 is a diagram of a scenario of DMG SBP with bistatic according to an embodiment of this application. As shown in FIG. 18, the first device sends the first frame to the second device per instance, in other words, sends the first frame to the second device before each instance starts, and the first device sends the sensing measurement result to the second device per instance, in other words, may send, by using a frame that corresponds to each instance and that is used to feed back a DMG SBP report, the sensing measurement result corresponding to the instance to the second device. Specifically, after the first device and the second device complete setup of the DMG SBP, and after the first device and the third device complete DMG measurement setup, the first device and the third device may perform sensing measurement. For each sensing measurement instance, each time before the first device sends a sensing PPDU (including a BRP frame of the TRN) to the third device, the first device may send the first frame to the second device (the DMG SBP initiator). Optionally, when receiving a second frame from the second device, the first device sends a sensing PPDU to the third device, receives a BRP report frame from the third device, and performs sensing measurement. After the sensing measurement is completed and the sensing measurement result is obtained, for each sensing measurement instance, the first device may send the sensing measurement result corresponding to the instance to the second device by using the DMG SBP report (DMG SBP report) frame.

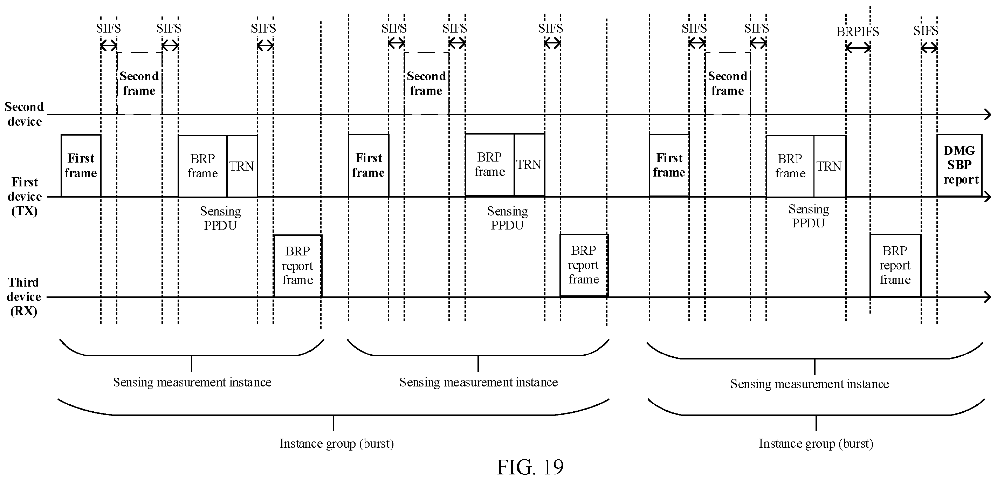

FIG. 19 is a diagram of another scenario of DMG SBP with bistatic according to an embodiment of this application. As shown in FIG. 19, the first device sends the first frame to the second device per instance, in other words, sends the first frame to the second device before each instance starts. The first device sends the sensing measurement result to the second device per instance group, in other words, may send, by using a frame that corresponds to a last instance in each instance group and that is used to feed back the DMG SBP report, sensing measurement results corresponding to all instances in the instance group to the second device, or may send, by using a frame that corresponds to a first instance in a next instance group and that is used to feed back the DMG SBP report, sensing measurement results corresponding to all instances in the instance group to the second device. In FIG. 16, an example in which the first device sends, by using the frame that corresponds to a first instance in a next instance group and that is used to feed back the DMG SBP report, the sensing measurement results corresponding to all instances in the instance group to the second device is used for description. Specifically, after the first device and the second device complete setup of the DMG SBP, and after the first device and the third device complete DMG measurement setup, the first device and the third device may perform sensing measurement. For each sensing measurement instance, each time before the first device sends a sensing PPDU (including a BRP frame of the TRN) to the third device, the first device may send the first frame to the second device (the DMG SBP initiator). Optionally, when receiving a second frame from the second device, the first device sends a sensing PPDU to the third device, receives a BRP report frame from the third device, and performs sensing measurement. After the sensing measurement is completed and the sensing measurement result is obtained, for each instance group, the first device may send sensing measurement results corresponding to all instances in the instance group to the second device by using a DMG SBP report (DMG SBP report) frame, where the DMG SBP report frame may be a DMG SBP report frame corresponding to a last instance in a current instance group, or may be a DMG SBP report frame corresponding to a first instance in a next instance group.

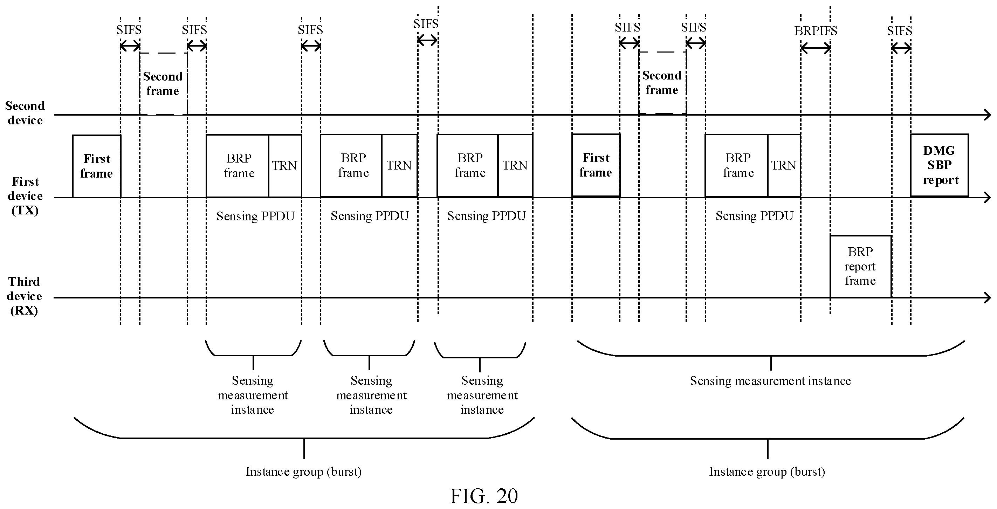

FIG. 20 is a diagram of another scenario of DMG SBP with bistatic according to an embodiment of this application. As shown in FIG. 20, the first device sends the first frame to the second device per instance group, in other words, sends the first frame to the second device before each instance group starts, and the first device sends the sensing measurement result to the second device per instance group, in other words, may send, by using a frame that corresponds to a last instance in each instance group and that is used to feed back the DMG SBP report, sensing measurement results corresponding to all instances in the instance group to the second device, or may send, by using a frame that corresponds to a first instance in a next instance group and that is used to feed back the DMG SBP report, sensing measurement results corresponding to all instances in the instance group to the second device. In FIG. 20, an example in which the first device sends, by using the frame that corresponds to a first instance in a next instance group and that is used to feed back the DMG SBP report, the sensing measurement results corresponding to all instances in the instance group to the second device. For a specific implementation, refer to the descriptions in FIG. 18 and FIG. 19.

FIG. 21 is a diagram of another scenario of DMG SBP with bistatic according to an embodiment of this application. As shown in FIG. 21, the first device sends the first frame to the second device per instance, in other words, sends the first frame to the second device before each instance starts, and the first device sends the sensing measurement result to the second device per instance, in other words, may send, by using a frame that corresponds to each instance and that is used to feed back a DMG SBP report, the sensing measurement result corresponding to the instance to the second device. Specifically, after the first device and the second device complete setup of the DMG SBP, and after the first device and the third device complete DMG measurement setup, the first device may perform sensing measurement. For each sensing measurement instance, the third device (a sensing responder) sends a sensing PPDU (including a BRP frame of the TRN) to the first device. Before sending the BRP frame, the first device may send the first frame to the second device (the DMG SBP initiator). Optionally, when receiving a second frame from the second device, the first device sends the BRP frame, receives the sensing PPDU (including the BRP frame of the TRN) sent by the third device, and performs sensing measurement. After the sensing measurement is completed and the sensing measurement result is obtained, for each sensing measurement instance, the first device may send a sensing measurement result corresponding to the instance to the second device by using the DMG SBP report (DMG SBP report) frame.

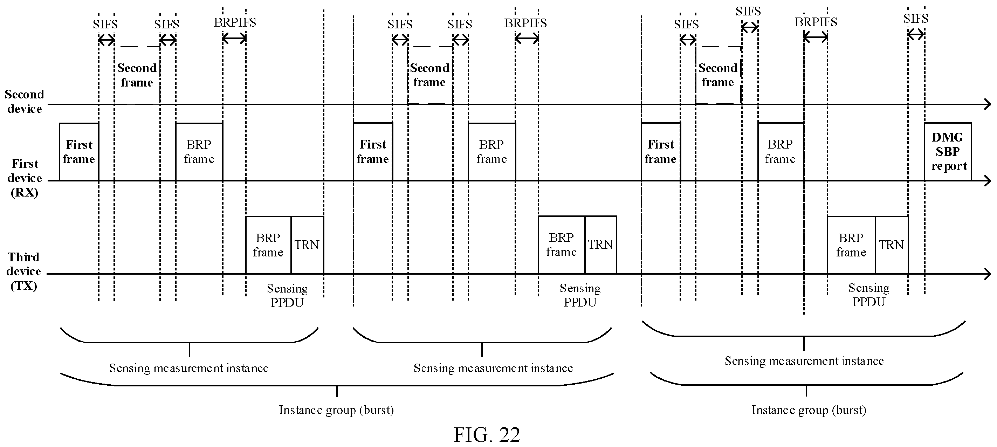

FIG. 22 is a diagram of another scenario of DMG SBP with bistatic according to an embodiment of this application. As shown in FIG. 22, the first device sends the first frame to the second device per instance, in other words, sends the first frame to the second device before each instance starts. The first device sends the sensing measurement result to the second device per instance group, in other words, may send, by using a frame that corresponds to a last instance in each instance group and that is used to feed back the DMG SBP report, sensing measurement results corresponding to all instances in the instance group to the second device, or may send, by using a frame that corresponds to a first instance in a next instance group and that is used to feed back the DMG SBP report, sensing measurement results corresponding to all instances in the instance group to the second device. In FIG. 22, an example in which the first device sends, by using the frame that corresponds to a first instance in a next instance group and that is used to feed back the DMG SBP report, the sensing measurement results corresponding to all instances in the instance group to the second device is used for description. Specifically, after the first device and the second device complete setup of the DMG SBP, and after the first device and the third device complete DMG measurement setup, the first device may perform sensing measurement. For each sensing measurement instance, the third device (a sensing responder) sends a sensing PPDU (including a BRP frame of the TRN) to the first device. Before sending the BRP frame, the first device may send the first frame to the second device (the DMG SBP initiator). Optionally, when receiving a second frame from the second device, the first device sends the BRP frame, receives the sensing PPDU (including the BRP frame of the TRN) sent by the third device, and performs sensing measurement. After the sensing measurement is completed and the sensing measurement result is obtained, for each instance group, the first device may send sensing measurement results corresponding to all instances in the instance group to the second device by using a DMG SBP report (DMG SBP report) frame, where the DMG SBP report frame may be a DMG SBP report frame corresponding to a last instance in a current instance group, or may be a DMG SBP report frame corresponding to a first instance in a next instance group.

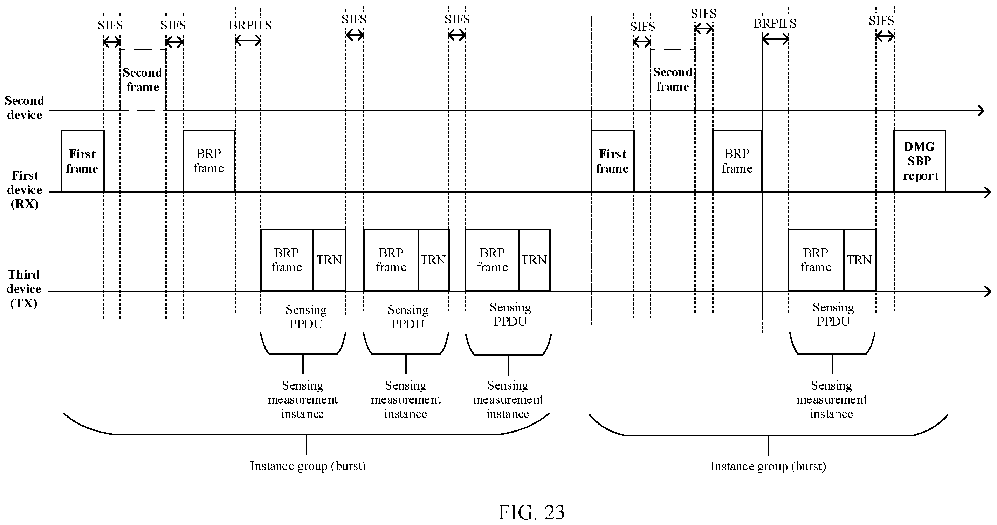

FIG. 23 is a diagram of still another scenario of DMG SBP with bistatic according to an embodiment of this application. As shown in FIG. 23, the first device sends the first frame to the second device per instance group, in other words, sends the first frame to the second device before each instance group starts, and the first device sends the sensing measurement result to the second device per instance group, in other words, may send, by using a frame that corresponds to a last instance in each instance group and that is used to feed back the DMG SBP report, sensing measurement results corresponding to all instances in the instance group to the second device, or may send, by using a frame that corresponds to a first instance in a next instance group and that is used to feed back the DMG SBP report, sensing measurement results corresponding to all instances in the instance group to the second device. In FIG. 23, an example in which the first device sends, by using the frame that corresponds to a first instance in a next instance group and that is used to feed back the DMG SBP report, the sensing measurement results corresponding to all instances in the instance group to the second device. For a specific implementation, refer to the descriptions in FIG. 21 and FIG. 22.

### Multistatic (multistatic):

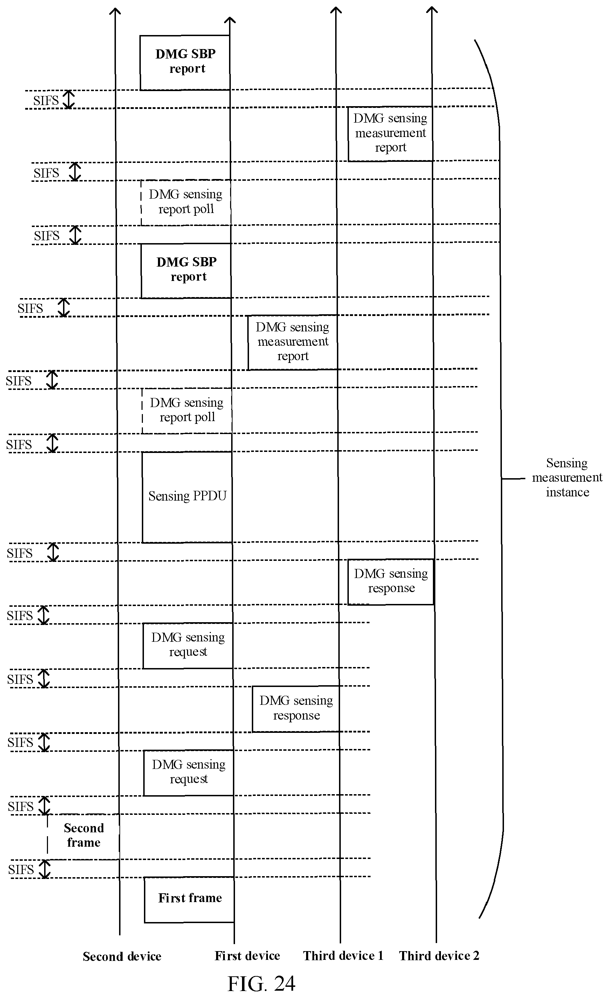

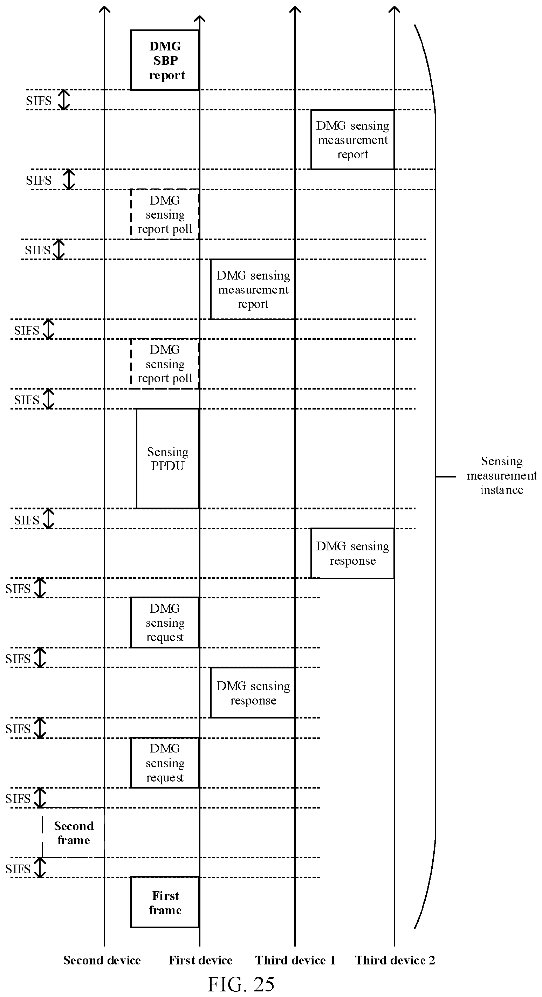

The third device in the multistatic type includes a plurality of devices. An example in which the third device includes two devices is used for description in FIG. 24 and FIG. 25. For the multistatic type, the first device serves as a transmitter of a sensing PPDU, and the third device serves as a receiver of the sensing PPDU. The sensing PPDU may carry a TRN field. The first device sends the sensing PPDU to each device in the third device, where the TRN is used for sensing, and the TRN may be received by all third devices (including a non-target receiver). The sensing of the multistatic type may include an initiation phase, a sounding phase, and a report phase. The initiation phase includes: The first device sends a DMG sensing request frame to the third device, and the third device returns a DMG sensing response frame.

FIG. 24 is a diagram of a scenario of DMG SBP with multistatic according to an embodiment of this application. As shown in FIG. 24, the first device sends the first frame to the second device per instance, in other words, sends the first frame to the second device before each instance starts, and the first device sends the sensing measurement result to the second device per instance, in other words, may send, by using a frame that corresponds to each instance and that is used to feed back a DMG SBP report, the sensing measurement result corresponding to the instance to the second device. It should be noted that the first device may feed back, in a form of each of the third devices, the sensing measurement result corresponding to the instance to the second device.

FIG. 25 is a diagram of another scenario of DMG SBP with multistatic according to an embodiment of this application. As shown in FIG. 25, the first device sends the first frame to the second device per instance, in other words, sends the first frame to the second device before each instance starts, and the first device sends the sensing measurement result to the second device per instance, in other words, may send, by using a frame that corresponds to each instance and that is used to feed back a DMG SBP report, the sensing measurement result corresponding to the instance to the second device. It should be noted that the first device may feed back, in a form of a plurality of devices in the third device, the sensing measurement result corresponding to the instance to the second device.

### Monostatic with coordination (monostatic with coordination):

The sensing of the monostatic coordination type may include an initiation phase, a sounding phase, and a report phase. A plurality of devices in the third device may perform self-sending and self-receiving sensing measurement at the same time or in a time-division manner.

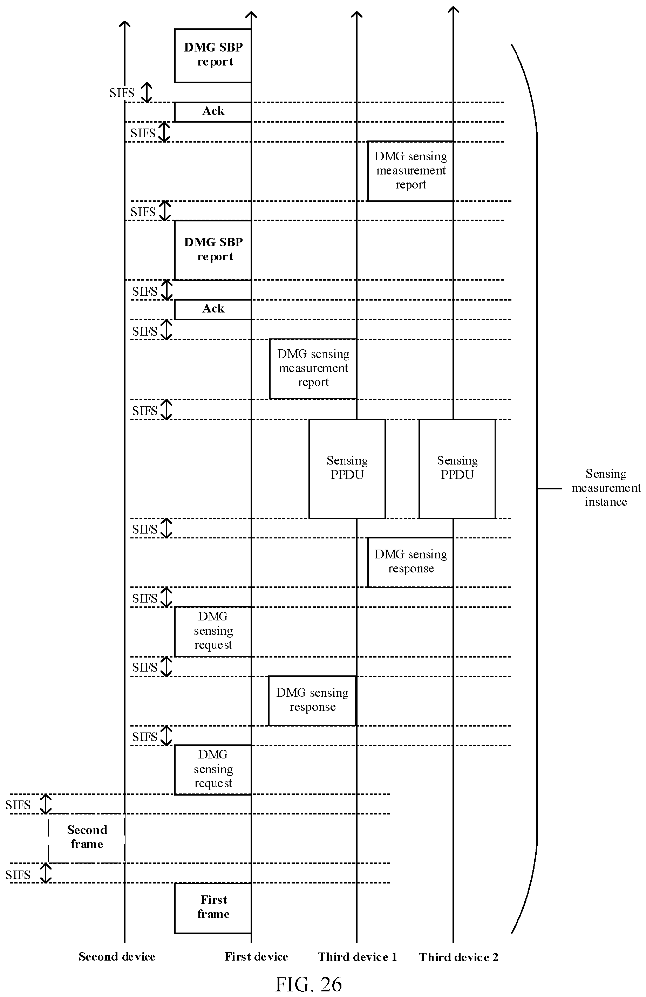

FIG. 26 is a diagram of a scenario of DMG SBP with monostatic with coordination according to an embodiment of this application. As shown in FIG. 26, a plurality of devices in the third device simultaneously perform self-sending and self-receiving sensing measurement. The first device sends the first frame to the second device per instance, in other words, sends the first frame to the second device before each instance starts, and the first device sends the sensing measurement result to the second device per instance, in other words, may send, by using a frame that corresponds to each instance and that is used to feed back a DMG SBP report, the sensing measurement result corresponding to the instance to the second device. It should be noted that the first device may feed back, in a form of each of the third devices, the sensing measurement result corresponding to the instance to the second device.

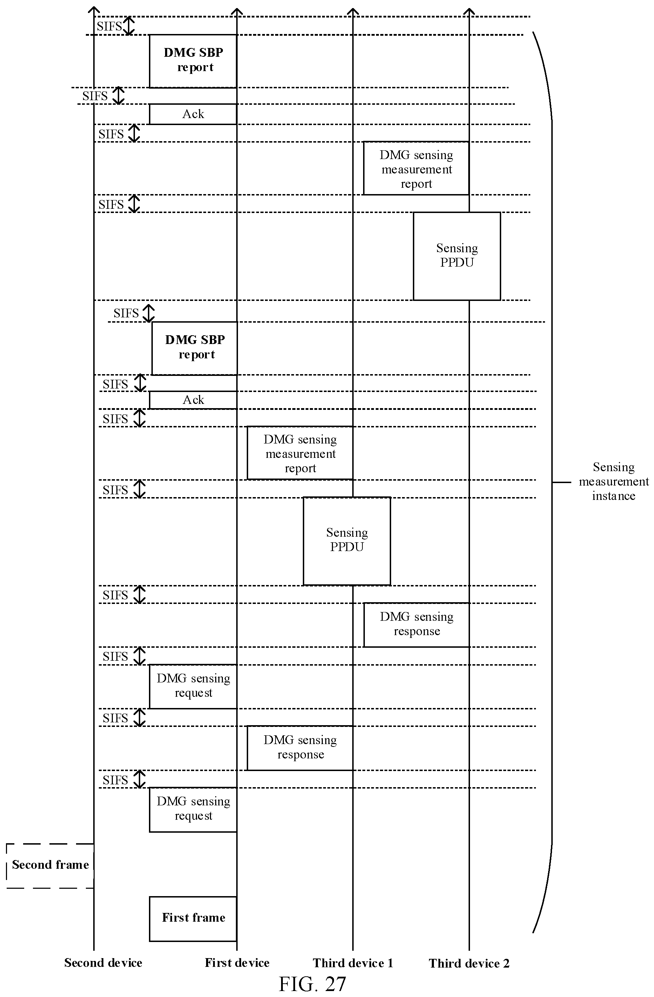

FIG. 27 is a diagram of a scenario of DMG SBP with monostatic with coordination according to an embodiment of this application. As shown in FIG. 27, a plurality of devices in the third device perform self-sending and self-receiving sensing measurement in a time-division manner (in turn). The first device sends the first frame to the second device per instance, in other words, sends the first frame to the second device before each instance starts, and the first device sends the sensing measurement result to the second device per instance, in other words, may send, by using a frame that corresponds to each instance and that is used to feed back a DMG SBP report, the sensing measurement result corresponding to the instance to the second device. It should be noted that the first device may feed back, in a form of each of the third devices, the sensing measurement result corresponding to the instance to the second device.

It should be noted that, in FIG. 26 and FIG. 27, the first device may feed back, in a form of each of the third devices, the sensing measurement result corresponding to the instance to the second device. Similarly, the first device may alternatively feed back, in a form of a plurality of devices in the third devices, the sensing measurement result corresponding to the instance to the second device. For details, refer to the descriptions in FIG. 25.

### Bistatic with coordination (bistatic with coordination):

The bistatic coordination type may be classified into two types, that is, the first device serves as a transmitter of a PPDU sensing and the third device serves as a receiver of the PPDU sensing; and the first device serves as a receiver of the PPDU sensing and the third device serves as a transmitter of the PPDU sensing. The sensing PPDU in the bistatic coordination type may be a BRP frame that carries the TRN.

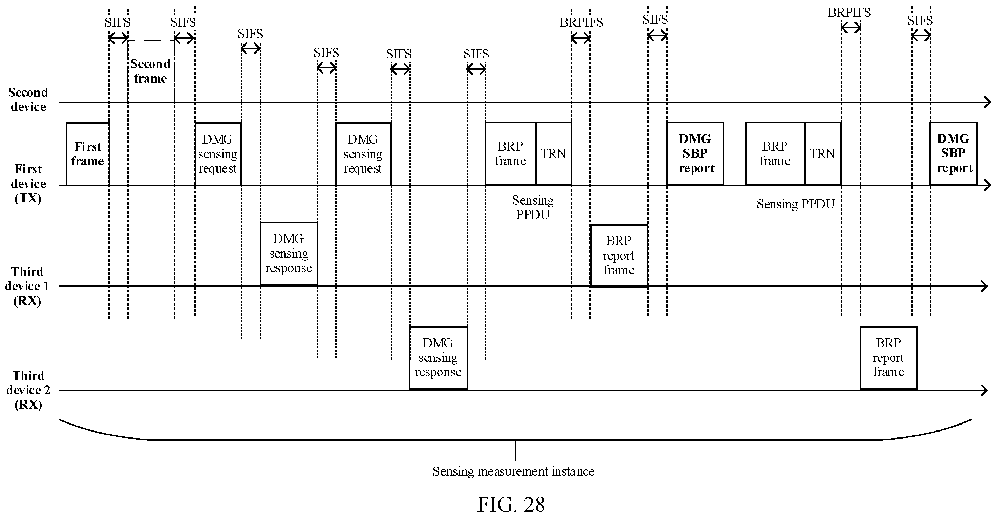

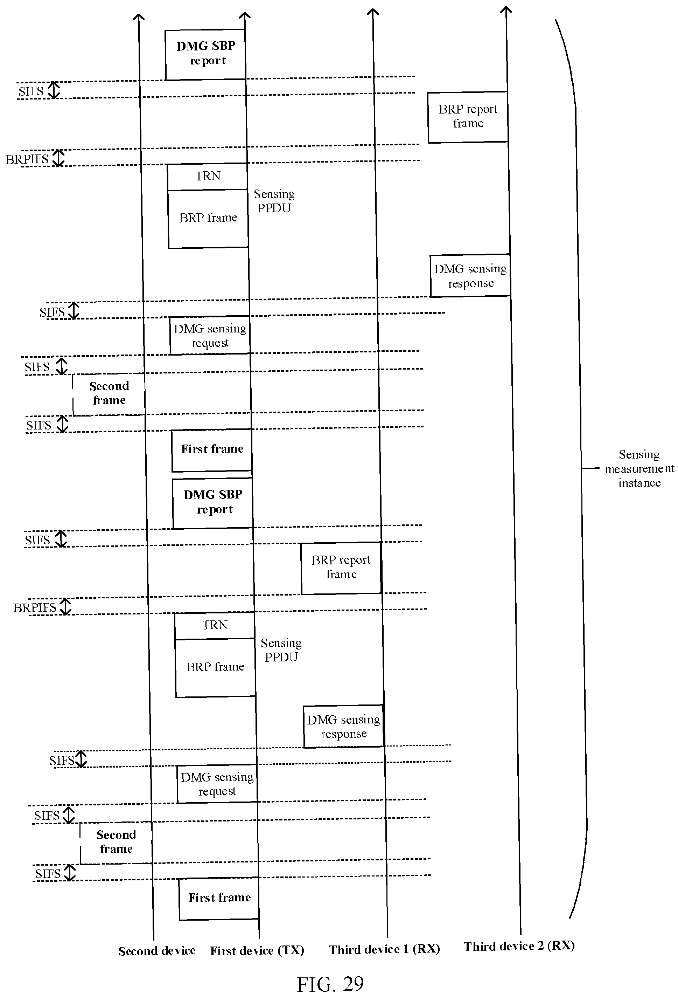

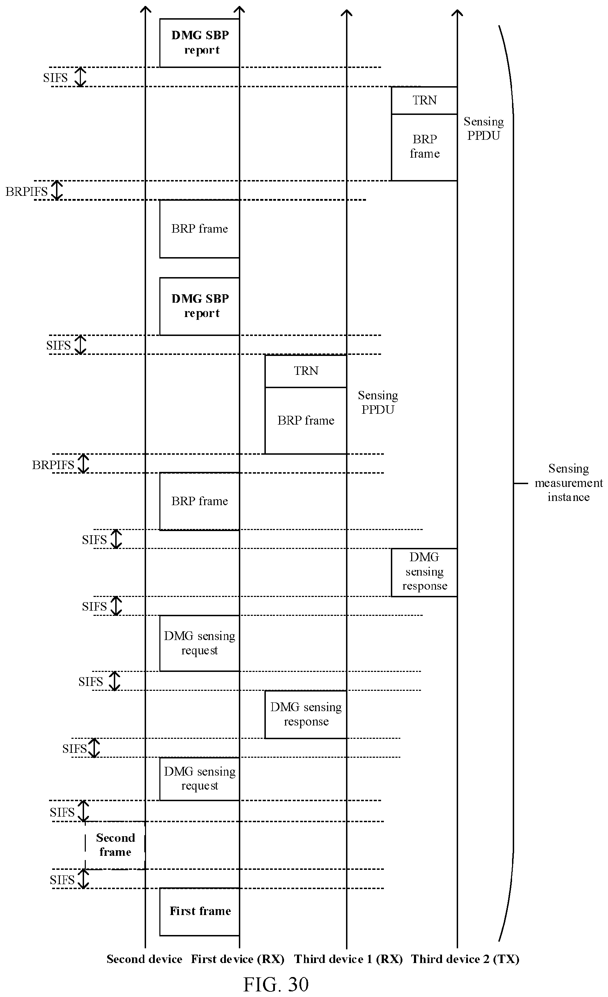

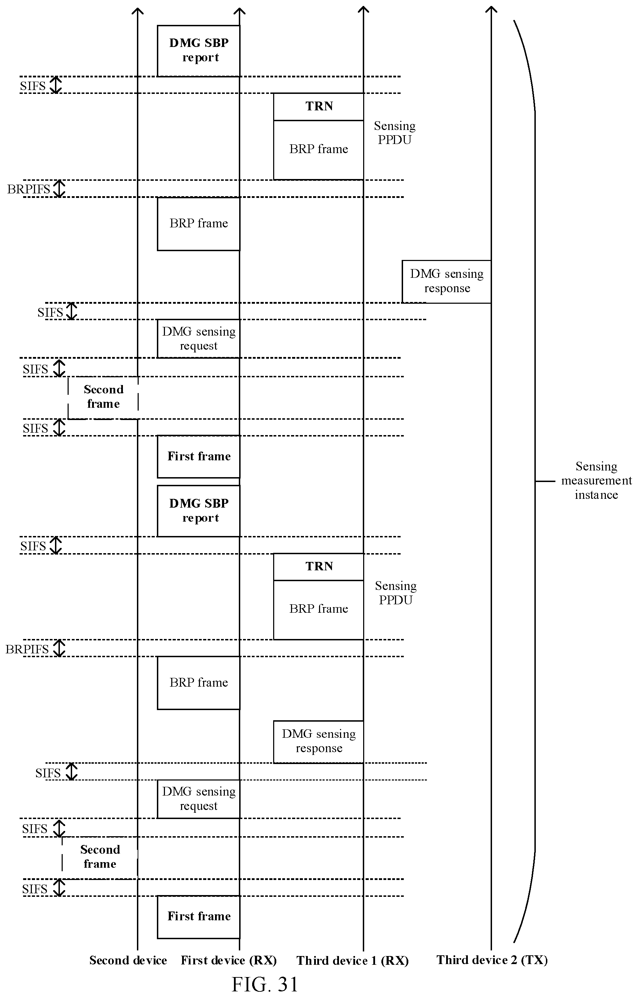

FIG. 28 and FIG. 29 are described below by using an example in which the first device serves as a transmitter of the sensing PPDU and the third device serves as a receiver of the sensing PPDU, and FIG. 30 and FIG. 31 are described by using an example in which the first device serves as a receiver of the sensing PPDU, the third device serves as a transmitter of the sensing PPDU, and the third device includes two devices.

FIG. 28 and FIG. 29 are diagrams of scenarios of DMG SBP with bistatic with coordination according to an embodiment of this application. As shown in FIG. 28 and FIG. 29, the first device sends the first frame to the second device per instance, in other words, sends the first frame to the second device before each instance starts, and the first device sends the sensing measurement result to the second device per instance, in other words, may send, by using a frame that corresponds to each instance and that is used to feed back a DMG SBP report, the sensing measurement result corresponding to the instance to the second device. It should be noted that a difference between FIG. 28 and FIG. 29 lies in that, in FIG. 28, the first device may send the first frame to the second device once and for all before sensing measurement with a plurality of devices in the third device starts, and in FIG. 29, the first device may separately send first frames to the second device before the sensing measurement with the plurality of devices in the third device starts.

It should be noted that, in FIG. 28 and FIG. 29, the first device may feed back, in a form of each of the third devices, the sensing measurement result corresponding to the instance to the second device. Similarly, the first device may alternatively feed back, in a form of a plurality of devices in the third devices, the sensing measurement result corresponding to the instance to the second device.

FIG. 30 and FIG. 31 are diagrams of other scenarios of DMG SBP with bistatic with coordination according to an embodiment of this application. As shown in FIG. 30 and FIG. 31, the first device sends the first frame to the second device per instance, in other words, sends the first frame to the second device before each instance starts, and the first device sends the sensing measurement result to the second device per instance, in other words, may send, by using a frame that corresponds to each instance and that is used to feed back a DMG SBP report, the sensing measurement result corresponding to the instance to the second device. A difference between FIG. 30 and FIG. 31 lies in that, in FIG. 30, the first device may send the first frame to the second device once and for all before sensing measurement with a plurality of devices in the third device starts, and in FIG. 31, the first device may separately send first frames to the second device before sensing measurement with the plurality of devices in the third device starts.

It should be noted that, in FIG. 30 and FIG. 31, the first device may feed back, in a form of each of the third device, the sensing measurement result corresponding to the instance to the second device. Similarly, the first device may alternatively feed back, in a form of a plurality of devices in the third device, the sensing measurement result corresponding to the instance to the second device.

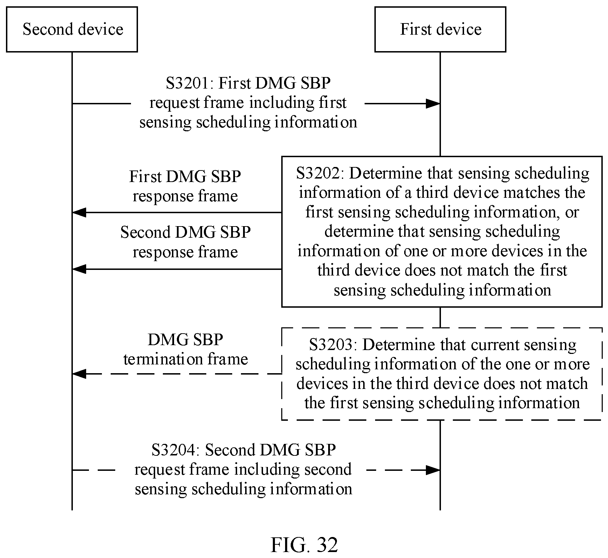

FIG. 32 is an interaction flowchart of another communication method according to an embodiment of this application. In FIG. 32, an example in which a first device and a second device are used as execution bodies of an interaction diagram is used to illustrate the method. However, the execution bodies of the interaction diagram are not limited in this application. For example, the first device in FIG. 32 may be a chip, a chip system, or a processor that supports the first device in implementing the method, or may be a logical module or software that can implement all or some functions of the first device. The second device in FIG. 32 may be a chip, a chip system, or a processor that supports the second device in implementing the method, or may be a logical module or software that can implement all or some functions of the second device. The first device, the second device, and the third device may be APs or non-AP STAs. The first device may be a DMG SBP responder and a DMG sensing initiator. The second device may be a DMG SBP initiator. The third device may be a DMG sensing responder. As shown in FIG. 32, the communication method includes but is not limited to the following steps. Step S3203 and step S3204 are optional steps.

S3201: The second device sends a first DMG SBP request frame including first sensing scheduling information to the first device. Correspondingly, the first device receives the first DMG SBP request frame from the second device.

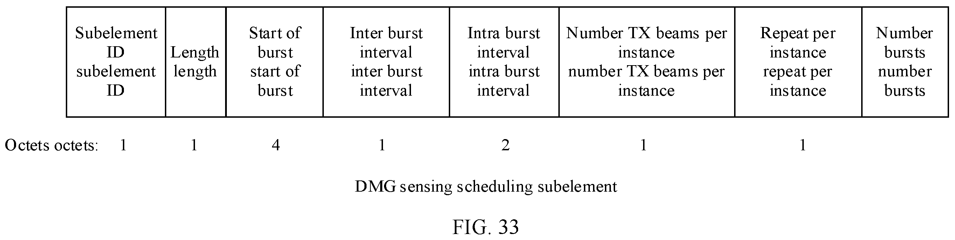

The first device may establish DMG SBP with the second device. In a DMG SBP setup phase, the second device may send the first DMG SBP request frame to the first device. The first DMG SBP request frame may include first sensing scheduling information. For example, the first sensing scheduling information may be a time window used for sensing measurement, or the first sensing scheduling information may be other information. A type of the first sensing scheduling is not limited in this embodiment. The first sensing scheduling information may use a DMG sensing scheduling subelement (DMG sensing scheduling subelement). For a format of the DMG sensing scheduling subelement, refer to FIG. 33. FIG. 33 is a diagram of a structure of a DMG sensing scheduling subelement according to an embodiment of this application. As shown in FIG. 33, the DMG sensing and scheduling subelement includes a subelement ID (subelement ID) field, a length (length) field, a start of burst (start of burst) field, an inter burst interval (inter burst interval) field, an intra burst interval (intra burst interval) field, a number TX beams per instance (number TX beams per instance) field, a repeat per instance (repeat per instance) field, and a number bursts (number bursts) field.

S3202: The first device determines that sensing scheduling information of the third device matches the first sensing scheduling information, and sends a first DMG SBP response frame to the second device. Correspondingly, the second device receives the first DMG SBP response frame from the first device. Alternatively, the first device determines that sensing scheduling information of one or more devices in the third device does not match the first sensing scheduling information, and sends a second DMG SBP response frame to the second device. Correspondingly, the second device receives the second DMG SBP response frame from the first device.

The third device includes one or more devices.

After receiving the first DMG SBP request frame from the second device, the first device may determine, based on the locally stored sensing scheduling information of the third device, whether the sensing scheduling information of the third device matches the first sensing scheduling information. If the sensing scheduling information of the third device matches the first sensing scheduling information, the first device may send the first DMG SBP response frame to the second device, and the first DMG SBP response frame indicates that the first device successfully establishes the DMG SBP with the second device. This indicates that subsequent sensing measurement time of the third device is included in the time window indicated by the first sensing scheduling information. Optionally, a frequency, a periodicity, and the like of subsequent sensing measurement of the third device are also included in a frequency, a periodicity, and the like indicated by the first sensing scheduling information. In other words, a parameter in the DMG sensing scheduling subelement may be applied to the third device.

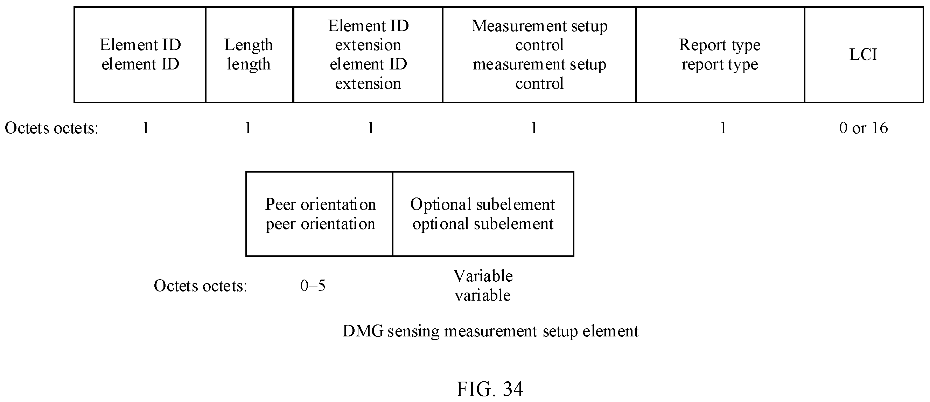

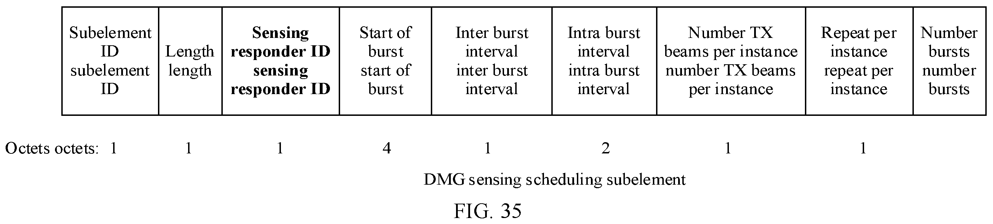

Optionally, at least one of the first DMG SBP response frame and the second DMG SBP response frame may include the sensing scheduling information of the third device. It may be understood that the at least one of the first DMG SBP response frame and the second DMG SBP response frame may include sensing scheduling information of some or all devices in the third device. The sensing scheduling information may be one or more DMG sensing scheduling subelements, and the DMG sensing scheduling subelement is carried in a DMG sensing measurement setup element. It may be understood that at least one of the first DMG SBP response frame and the second DMG SBP response frame may include the DMG sensing measurement setup element. The element may include a plurality of DMG sensing scheduling subelements, and each subelement corresponds to one device in the third device. FIG. 34 is a diagram of a structure of a DMG sensing measurement setup element according to an embodiment of this application. As shown in FIG. 34, the DMG sensing measurement setup element includes an element ID (element ID) field, a length (length) field, an element ID extension (element ID extension) field, a measurement setup control (measurement setup control) field, a report type (report type) field, a location configuration information (locationconfigurationinformation, LCI) field, a peer orientation (peer orientation) field, and an optional subelement (optional subelement) field. The DMG sensing scheduling subelement may be included in an optional subelement. In this case, a format of the DMG sensing scheduling subelement may be shown in FIG. 35. FIG. 35 is a diagram of a structure of another DMG sensing scheduling subelement according to an embodiment of this application. As shown in FIG. 35, different from the DMG sensing scheduling subelement shown in FIG. 33, the DMG sensing scheduling subelement shown in FIG. 35 may further include a sensing responder ID (sensing responder ID) field. Each sensing responder ID may indicate the third device corresponding to the scheduling subelement, and the ID may be a media access control (medium access control, MAC) address or an association identifier (association identifier, AID) of the third device. For example, the ID field may be indicated by using one byte. A length of the ID field is not limited in this embodiment.

Alternatively, if sensing scheduling information of one or more devices in the third device does not match the first sensing scheduling information, it may be understood that the first device determines, based on the locally stored sensing scheduling information of the third device, that the third device cannot meet a parameter in a first DMG SBP frame, for example, if sensing measurement time of some of the third devices do not overlap the time window indicated by the first sensing scheduling information, the first device may send the second DMG SBP response frame to the second device. The second DMG SBP response frame indicates that the first device fails to establish DMG SBP with the second device. Optionally, the second DMG SBP response frame includes the sensing scheduling information of the third device. It may be understood that the second DMG SBP response frame may include the sensing scheduling information of some or all devices in the third device.

Optionally, if sensing scheduling information of one or more devices in the third device does not match the first sensing scheduling information, the first device alternatively sends a DMG SBP termination frame to the second device, where the DMG SBP termination frame indicates that the first device terminates DMG SBP with the second device.

S3203: The first device determines that current sensing scheduling information of the one or more devices in the third device does not match the first sensing scheduling information, and sends the DMG SBP termination frame to the second device. Correspondingly, the second device receives the DMG SBP termination frame from the first device.

In a possible implementation, after the first device sends the first DMG SBP response frame to the second device, if the first device determines that the current sensing scheduling information of the one or more devices in the third device does not match the first sensing scheduling information, the first device may send the DMG SBP termination frame to the second device. The DMG SBP termination frame indicates that the first device terminates DMG SBP with the second device. Optionally, the DMG SBP termination frame includes the sensing scheduling information of the third device. It may be understood that the DMG SBP termination frame may include sensing scheduling information of some or all devices in the third device.

In a possible implementation, after the first device sends the second DMG SBP response frame to the second device, if the first device determines that the current sensing scheduling information of the one or more devices in the third device does not match the first sensing scheduling information, the first device may send the DMG SBP termination frame to the second device.

Optionally, to improve a success rate and efficiency of establishing DMG SBP, after receiving the first DMG SBP request frame from the second device, the first device may establish measurement sensing with the third device, and determine current sensing scheduling information of the third device. One or more of the first DMG SBP response frame, the second DMG SBP response frame, and the DMG SBP termination frame that are replied to the second device may carry the current sensing scheduling information of the third device. It may be understood that one or more of the first DMG SBP response frame, the second DMG SBP response frame, and the DMG SBP termination frame may include the current sensing scheduling information of some or all of devices in the third device. The sensing scheduling information is one or more DMG sensing scheduling subelements, and the DMG sensing scheduling subelement is carried in the DMG sensing measurement setup element. For a specific diagram of a structure of the DMG sensing measurement setup element, refer to the descriptions in FIG. 34.

S3204: The second device sends a second DMG SBP request frame including second sensing scheduling information to the first device. Correspondingly, the first device receives the second DMG SBP request frame from the second device.

The second sensing scheduling information is determined by the second device based on the sensing scheduling information of the third device. Specifically, the second device receives the sensing scheduling information of the third device from the first device, where the sensing scheduling information of the third device may include a sensing measurement time window of each device. Based on the information, the second device may resend a DMG SBP request frame to the first device, namely, the second DMG SBP request frame. The second DMG SBP request frame includes the second sensing scheduling information. For example, the second sensing scheduling information may include a sensing measurement time window of each device in the third device.

In this embodiment, the second device may learn of the sensing scheduling information of the third device. In this way, the second device may remain in a wake-up or active state within sensing measurement time indicated by the sensing scheduling information of the third device, or perform preprocessing of receiving a sensing measurement result, to receive the sensing measurement result. Therefore, the second device can receive, in a timely manner, the sensing measurement result fed back by the first device. Whether the first device is an AP or a non-AP STA is not limited, and whether the first device is associated with the second device is not limited, so that efficiency and accuracy of feeding back the sensing measurement result can be improved.

The foregoing content describes the methods provided in this application. To better implement the foregoing solutions in embodiments of this application, an embodiment of this application further provides a corresponding apparatus.

In embodiments of this application, the communication apparatus may be divided into functional modules based on the foregoing method examples. For example, functional modules may be obtained through division based on corresponding functions, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used.

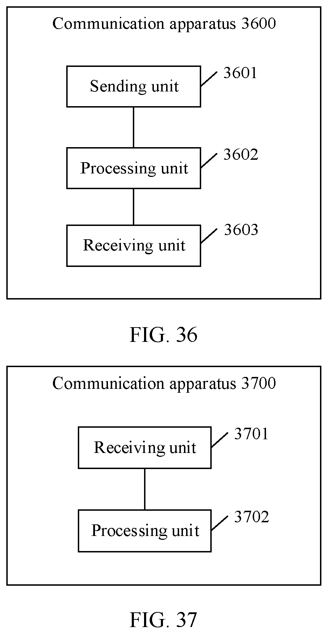

FIG. 36 is a diagram of a structure of a communication apparatus according to an embodiment of this application. The communication apparatus may be a first device, a module (for example, a chip or a processor) in the first device, or a logical module or software that can implement all or some functions of the first device. As shown in FIG. 36, a communication apparatus 3600 includes at least a sending unit 3601, a processing unit 3602, and a receiving unit 3603.

The sending unit 3601 is configured to send a first frame to a second device, where the first frame includes a first message, and the first message is used to notify the second device to prepare to receive a sensing measurement result.

The processing unit 3602 is configured to obtain a sensing measurement result.

In an embodiment, when obtaining the sensing measurement result, the processing unit 3602 is specifically configured to: send and receive a sensing PPDU, and perform sensing measurement based on the sensing PPDU, to obtain the sensing measurement result.

In an embodiment, when obtaining the sensing measurement result, the processing unit 3602 is specifically configured to: send the sensing PPDU to a third device, where the third device includes one or more devices; and receive the sensing measurement result from the third device, where the sensing measurement result is determined by the third device based on the sensing PPDU.

In an embodiment, when obtaining the sensing measurement result, the processing unit 3602 is specifically configured to: receive the sensing PPDU from the third device; and the first device performs sensing measurement based on the sensing PPDU, to obtain the sensing measurement result.

In an embodiment, the sensing measurement includes at least one instance group, and each instance group in the at least one instance group includes one or more instances. Each of the one or more instances includes: obtaining a PPDU, and performing the sensing measurement based on the sensing PPDU, to obtain the sensing measurement result.

In an embodiment, when sending the first frame to the second device, the sending unit 3601 is specifically configured for the first device to send, the first frame to the second device per instance before each instance starts; or for the first device to send the first frame to the second device in a unit of an instance group before each instance group starts.

In an embodiment, the sending unit 3601 is further configured to send the sensing measurement result to the second device.

In an embodiment, that the sending unit 3601 sends the sensing measurement result to the second device is specifically that: After each instance ends, the first device sends the sensing measurement result to the second device; or after each instance group ends, the first device sends the sensing measurement result to the second device.

In an embodiment, that after each instance ends, the sending unit 3601 sends the sensing measurement result to the second device is specifically that: By using a frame that corresponds to each instance and that is used to feed back a DMG SBP report, the sensing measurement result corresponding to the instance to the second device is sent.

In an embodiment, that after each instance group ends, the sending unit 3601 sends the sensing measurement result to the second device is specifically that: By using a frame that corresponds to a last instance in each instance group and that is used to feed back a DMG SBP report, sensing measurement results corresponding to all instances in the instance group are sent to the second device, or by using a frame that corresponds to a first instance in a next instance group and that is used to feed back a DMG SBP report, sensing measurement results corresponding to all instances in the instance group are sent to the second device.

In an embodiment, when performing sensing measurement, the processing unit 3602 is specifically configured to perform sensing measurement when a second frame is received from the second device.

In an embodiment, the communication apparatus 3600 further includes:
a receiving unit 3603, configured to receive a DMG SBP request frame from the second device, where the DMG SBP request frame is used to request the second device to establish SBP with the first device; and
a sending unit 3601, further configured to send a DMG SBP response frame to the second device, where the DMG SBP response frame indicates that the first device successfully establishes DMG SBP with the second device.

In an embodiment, the sending unit 3601 is further configured to send a DMG measurement setup request frame to the third device, where the DMG measurement setup request frame is used to request to establish DMG measurement, and the third device includes one or more devices.

The communication apparatus 3600 further includes: a receiving unit 3603, further configured to receive a DMG measurement setup response frame from the third device, where the DMG measurement setup response frame indicates that the first device successfully establishes DMG measurement with the third device.

In an embodiment, the first frame is a DMG sensing request frame or a DMG sensing poll frame.

In an embodiment, the first frame is the DMG sensing request frame, the DMG sensing request frame includes a TTD beamforming information field, the TDD beamforming information field includes a first field, a DMG measurement setup ID field, a measurement instance group ID field, a sensing instance SN field, and a sensing type field, and the first message is determined based on the first field.

In an embodiment, the first frame is the DMG sensing poll frame, and the DMG sensing poll frame includes a DMG measurement setup ID field, a measurement instance group ID field, and a sensing instance SN field.

For more detailed descriptions of the sending unit 3601, the processing unit 3602, and the receiving unit 3603, directly refer to related descriptions of the first device in the method embodiments shown in FIG. 10 to FIG. 31. Details are not described herein again.

FIG. 37 is a diagram of a structure of another communication apparatus according to an embodiment of this application. The communication apparatus may be a first device, a module (for example, a chip or a processor) in the first device, or a logical module or software that can implement all or some functions of the first device. As shown in FIG. 37, a communication apparatus 3700 may include at least a receiving unit 3701 and a processing unit 3702.

The receiving unit 3701 is configured to receive a first DMG SBP request frame from a second device, where the first DMG SBP request frame includes first sensing scheduling information.

The processing unit 3702 is configured to: determine that sensing scheduling information of a third device matches first sensing scheduling information, and send a first DMG SBP response frame to the second device, where the third device includes one or more devices, and the first DMG SBP response frame indicates that the first device successfully establishes DMG SBP with the second device; or determine that sensing scheduling information of the one or more devices in the third device does not match first sensing scheduling information, and send a second DMG SBP response frame to the second device, where the second DMG SBP response frame indicates that the first device fails to establish DMG SBP with the second device.

In an embodiment, the processing unit 3702 is further configured to: determine that current sensing scheduling information of the one or more devices in the third device does not match the first sensing scheduling information, and send a DMG SBP termination frame to the second device, where the DMG SBP termination frame indicates that the first device terminates DMG SBP with the second device.

In an embodiment, the DMG SBP termination frame includes the sensing scheduling information of the third device.

In an embodiment, the first DMG SBP response frame and/or the second DMG SBP response frame include/includes the sensing scheduling information of the third device, the sensing scheduling information is one or more DMG sensing scheduling subelements, and the DMG sensing scheduling subelement is carried in a DMG sensing measurement setup element.

In an embodiment, the receiving unit 3701 is further configured to receive a second DMG SBP request frame from the second device, where the second DMG SBP request frame includes second sensing scheduling information, and the second sensing scheduling information is determined based on the sensing scheduling information of the third device.

For more detailed descriptions of the receiving unit 3701 and the processing unit 3702, directly refer to related descriptions of the first device in the method embodiments shown in FIG. 32 to FIG. 35. Details are not described herein again.

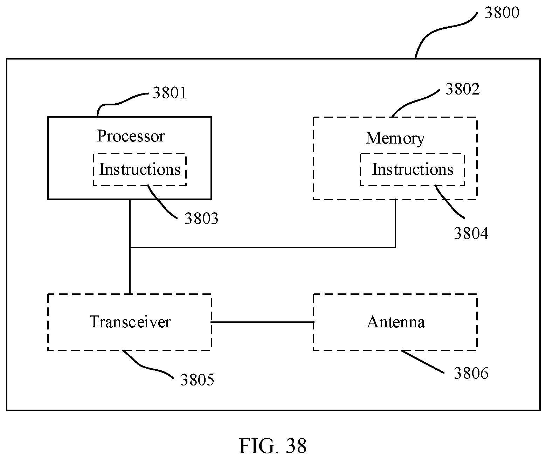

FIG. 38 is a diagram of a structure of another communication apparatus according to an embodiment of this application. As shown in FIG. 38, an apparatus 3800 may include one or more processors 3801. The processor 3801 may also be referred to as a processing unit, and may implement a specific control function. The processor 3801 may be a general-purpose processor, a dedicated processor, or the like,

In an optional design, the processor 3801 may alternatively store instructions 3803, and the instructions 3803 may be run on the processor, so that the apparatus 3800 performs the method described in the foregoing method embodiments.

In another optional design, the processor 3801 may include a transceiver unit for implementing a receiving function and a sending function. For example, the transceiver unit may be a transceiver circuit, an interface, an interface circuit, or a communication interface. The transceiver circuit, the interface, or the interface circuit configured to implement the receiving and sending functions may be separated, or may be integrated together. The transceiver circuit, the interface, or the interface circuit may be configured to read and write code/data. Alternatively, the transceiver circuit, the interface, or the interface circuit may be configured to transmit or transfer a signal.

In still another possible design, the apparatus 3800 may include a circuit, and the circuit may implement a sending, receiving, or communication function in the foregoing method embodiments.

Optionally, the apparatus 3800 may include one or more memories 3802. The memory 3802 may store instructions 3804. The instructions may be run on the processor, so that the apparatus 3800 performs the method described in the foregoing method embodiments. Optionally, the memory may further store data. Optionally, the processor may also store instructions and/or data. The processor and the memory may be separately disposed, or may be integrated together. For example, the correspondence described in the foregoing method embodiments may be stored in the memory or stored in the processor.

Optionally, the apparatus 3800 may further include a transceiver 3805 and/or an antenna 3806. The processor 3801 may be referred to as a processing unit, and controls the apparatus 3800. The transceiver 3805 may be referred to as a transceiver unit, a transceiver machine, a transceiver circuit, a transceiver apparatus, a transceiver module, or the like, and is configured to implement a transceiver function.

Optionally, the apparatus 3800 in this embodiment of this application may be configured to perform the method described in FIG. 10 to FIG. 35 in embodiments of this application.

In an embodiment, the communication apparatus 3800 may be used in the first device, a module (for example, a chip or a processor) in the first device, or a logical module or software that can implement all or some functions of the first device. When computer program instructions stored in the memory 3802 are executed, the processor 3801 is configured to control the processing unit 3602 to perform the operations performed in the foregoing embodiments, or is configured to control the processing unit 3702 to perform the operations performed in the foregoing embodiments, and the transceiver 3805 is configured to perform the operations performed by the sending unit 3601 and the receiving unit 3603 in the foregoing embodiments, or is configured to perform the operations performed by the receiving unit 3701 in the foregoing embodiments. The transceiver 3805 is further configured to send information to a communication apparatus other than the communication apparatus. The first device or the module in the first device may be further configured to perform various methods performed by the first device in the method embodiments in FIG. 10 to FIG. 35. Details are not described again.

The processor and the transceiver that are described in this application may be implemented on an integrated circuit (integrated circuit, IC), an analog IC, a radio frequency integrated circuit (radio frequency interface chip, RFIC), a hybrid signal IC, an application-specific integrated circuit (application-specific integrated circuit, ASIC), a printed circuit board (printed circuit board, PCB), an electronic device, or the like. The processor and the transceiver may be manufactured by using various IC technologies, for example, a complementary metal oxide semiconductor (complementary metal oxide semiconductor, CMOS), an N-type metal oxide semiconductor (nMetal-oxide-semiconductor, NMOS), a P-type metal oxide semiconductor (positive channel metal oxide semiconductor, PMOS), a bipolar junction transistor (Bipolar Junction Transistor, BJT), a bipolar CMOS (BiCMOS), silicon germanium (SiGe), and gallium arsenide (GaAs).

The apparatus described in the foregoing embodiment may be a first terminal device or a second terminal device. However, a scope of the apparatus described in this application is not limited thereto, and a structure of the apparatus may not be limited by that in FIG. 38. The apparatus may be an independent device, or may be a part of a larger device. For example, the apparatus may be:
(1) an independent integrated circuit IC, a chip, a chip system or subsystem;
(2) a set of one or more ICs, where optionally, the IC set may also include a storage component configured to store data and/or instructions;
(3) an ASIC, for example, a modem (MSM);
(4) a module that can be embedded in another device;
(5) a receiver, a terminal, an intelligent terminal, a cellular phone, a wireless device, a handheld device, a mobile unit, a vehicle-mounted device, a network device, a cloud device, an artificial intelligence device, a machine device, a home device, a medical device, an industrial device, or the like; or
(6) others.

An embodiment of this application further provides a computer-readable storage medium, and the computer-readable storage medium stores a computer program. When the program is executed by the processor, a procedure related to the first device in the communication method provided in the foregoing method embodiments may be implemented.

An embodiment of this application further provides a computer program product. When the computer program product is run on a computer or a processor, the computer or the processor is enabled to perform one or more steps in any one of the foregoing communication methods. When each of component modules of the foregoing device is implemented in a form of a software functional unit and is sold or used as an independent product, the component modules may be stored in the computer-readable storage medium.

An embodiment of this application further provides a chip system, including at least one processor and a communication interface. The communication interface and the at least one processor are interconnected through a line, and the at least one processor is configured to run a computer program or instructions, to perform some or all of the steps recorded in any one of the method embodiments corresponding to FIG. 10 to FIG. 35. The chip system may include a chip, or may include a chip and another discrete component.

An embodiment of this application further discloses a communication system. The system includes a first device, a second device, and a third device. For specific descriptions, refer to the communication methods shown in FIG. 10 to FIG. 35.

It should be understood that the memory mentioned in embodiments of this application may be a volatile memory or a nonvolatile memory, or may include both a volatile memory and a nonvolatile memory. The non-volatile memory may be a hard disk drive (hard disk drive, HDD), a solid-state drive (solid-state drive, SSD), a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). The memory is any other medium that can carry or store expected program code in a form of an instruction or a data structure and that can be accessed by a computer, but is not limited thereto. The memory in embodiments of this application may alternatively be a circuit or any other apparatus that can implement a storage function, and is configured to store the program instructions and/or the data.

It should be further understood that, the processor mentioned in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be noted that when the processor is a general purpose processor, a DSP, an ASIC, an FPGA or another programmable logic device, a discrete gate, a transistor logic device, or a discrete hardware component, the memory (a storage module) is integrated into the processor.

It should be noted that the memory described in this specification aims to include but is not limited to these memories and any memory of another proper type.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that units and algorithm steps in the examples described with reference to embodiments provided in this specification may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on this understanding, the technical solutions of this application essentially, the part contributing to the technology, or all or some of the technical solutions may be implemented in a form of a software product. A computer software product is stored in a storage medium and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a ROM, a RAM, a magnetic disk, or an optical disc.

A sequence of the steps of the method in embodiments of this application may be adjusted, combined, or removed based on an actual requirement.

The modules/units in the apparatuses in embodiments of this application may be combined, divided, and deleted based on an actual requirement.

In conclusion, the foregoing embodiments are merely intended for describing the technical solutions of this application, but not for limiting this application. Although this application is described in detail with reference to the foregoing embodiments, a person of ordinary skill in the art should understand that they may still make modifications to the technical solutions described in the foregoing embodiments or make equivalent replacements to some technical features thereof, without departing from the scope of the technical solutions of embodiments of this application.

## Claims

1. A communication method, comprising:
sending, by a first device, a first frame to a second device, wherein the first frame comprises a first message, and the first messageis used to notify the second device to prepare to receive a sensing measurement result; and
obtaining, by the first device, the sensing measurement result.

2. The method according to claim 1, wherein the obtaining, by the first device, the sensing measurement result comprises:
self-sending and self-receiving, by the first device, a sensing physical layer protocol data unit PPDU, and performing sensing measurement based on the sensing PPDU to obtain the sensing measurement result.

3. The method according to claim 1, wherein the obtaining, by the first device, the sensing measurement result comprises:
sending, by the first device, a sensing PPDU to a third device, wherein the third device comprises one or more devices; and receiving, by the first device, the sensing measurement result from the third device, wherein the sensing measurement result is determined by the third device based on the sensing PPDU.

4. The method according to claim 1, wherein the obtaining, by the first device, the sensing measurement result comprises:
receiving, by the first device, a sensing PPDU from a third device; and
performing, by the first device, sensing measurement based on the sensing PPDU, to obtain the sensing measurement result.

5. The method according to any one of claims 2 to 4, wherein the sensing measurement comprises at least one instance group, and each instance group in the at least one instance group comprises one or more instances; and
each of the one or more instances comprises:
obtaining the sensing physical layer protocol data unit PPDU, and performing the sensing measurement based on the sensing PPDU, to obtain the sensing measurement result.

6. The method according to claims 2 to 5, wherein the sending, by a first device, a first frame to a second device comprises:
sending, by the first device, the first frame to the second device per instance before each instance starts; or
sending, by the first device, the first frame to the second device per instance group before each instance group starts.

7. The method according to any one of claims 2 to 6, wherein the method further comprises:
sending, by the first device, the sensing measurement result to the second device.

8. The method according to claim 7, wherein the sending, by the first device, the sensing measurement result to the second device comprises:
sending, by the first device, the sensing measurement result to the second device after each instance ends; or
sending, by the first device, the sensing measurement result to the second device after each instance group ends.

9. The method according to claim 8, wherein the sending, by the first device, the sensing measurement result to the second device after each instance ends comprises:
sending, by the first device by using a frame that corresponds to each instance and that is used to feed back a DMG SBP report, the sensing measurement result corresponding to the instance to the second device.

10. The method according to claim 8, wherein the sending, by the first device, the sensing measurement result to the second device after each instance group ends comprises:
sending, by the first device by using a frame that corresponds to a last instance in each instance group and that is used to feed back a DMG SBP report, sensing measurement results corresponding to all instances in the instance group to the second device; or
sending, by the first device by using a frame that corresponds to a first instance in a next instance group and that is used to feed back a DMG SBP report, sensing measurement results corresponding to all instances in the instance group to the second device.

11. The method according to any one of claims 1 to 10, wherein the performing sensing measurement comprises:
performing, by the first device, the sensing measurement when receiving a second frame from the second device.

12. The method according to any one of claims 1 to 11, wherein the method further comprises:
receiving, by the first device, a DMG SBP request frame from the second device, wherein the DMG SBP request frame is used to request the second device to establish SBP with the first device; and
sending, by the first device, a DMG SBP response frame to the second device, wherein the DMG SBP response frame indicates that the first device successfully establishes DMG SBP with the second device.

13. The method according to any one of claims 1 to 12, wherein the method further comprises:
sending, by the first device, a DMG measurement setup request frame to the third device, wherein the DMG measurement setup request frame is used to request to establish DMG measurement, and the third device comprises one or more devices; and
receiving, by the first device, a DMG measurement setup response frame from the third device, wherein the DMG measurement setup response frame indicates that the first device successfully establishes DMG measurement with the third device.

14. The method according to any one of claims 1 to 13, wherein the first frame is a DMG sensing request frame or a DMG sensing poll frame.

15. The method according to claim 14, wherein the first frame is the DMG sensing request frame, the DMG sensing request frame comprises a time division duplex TDD beamforming information field, the TDD beamforming information field comprises a first field, a DMG measurement setup identifier ID field, a measurement instance group ID field, a sensing instance sequence number SN field, and a sensing type field, and the first message is determined based on the first field.

16. The method according to claim 14, wherein the first frame is the DMG sensing poll frame, and the DMG sensing poll frame comprises a DMG measurement setup identifier ID field, a measurement instance group ID field, and a sensing instance sequence number SN field.

17. A communication method, comprising:
receiving, by a first device, a first directional multi-gigabit DMG sensing by proxy SBP request frame from a second device, wherein the first DMG SBP request frame comprises first sensing scheduling information; and
determining, by the first device, that sensing scheduling information of a third device matches the first sensing scheduling information, and sending a first DMG SBP response frame to the second device, wherein the third device comprises one or more devices, and the first DMG SBP response frame indicates that the first device successfully establishes DMG SBP with the second device; or
determining, by the first device, that sensing scheduling information of one or more devices in the third device does not match the first sensing scheduling information, and sending a second DMG SBP response frame to the second device, wherein the second DMG SBP response frame indicates that the first device fails to establish DMG SBP with the second device.

18. The method according to claim 17, wherein the method further comprises:
determining, by the first device, that current sensing scheduling information of the one or more devices in the third device does not match the first sensing scheduling information, and sending a DMG SBP termination frame to the second device, wherein the DMG SBP termination frame indicates that the first device terminates DMG SBP with the second device.

19. The method according to claim 18, wherein the DMG SBP termination frame comprises the sensing scheduling information of the third device.

20. The method according to any one of claims 17 to 19, wherein the first DMG SBP response frame and/or the second DMG SBP response frame comprise/comprises the sensing scheduling information of the third device, the sensing scheduling information is one or more DMG sensing scheduling subelements, and the DMG sensing scheduling subelement is carried in a DMG sensing measurement setup element.

21. The method according to any one of claims 17 to 20, wherein the method further comprises:
receiving, by the first device, a second DMG SBP request frame from the second device, wherein the second DMG SBP request frame comprises second sensing scheduling information, and the second sensing scheduling information is determined based on the sensing scheduling information of the third device.

22. A communication method, comprising:
obtaining, by a first device, a sensing measurement result; and
that the first device sends the sensing measurement result to a second device comprises:
sending, by the first device, the sensing measurement result to the second device after each instance ends; or
sending, by the first device, the sensing measurement result to the second device after each instance group ends.

23. The method according to claim 22, wherein the sending, by the first device, the sensing measurement result to the second device after each instance ends comprises:
sending, by the first device by using a frame that corresponds to each instance and that is used to feed back a DMG SBP report, the sensing measurement result corresponding to the instance to the second device.

24. The method according to claim 22, wherein the sending, by the first device, the sensing measurement result to the second device after each instance group ends comprises:
sending, by the first device by using a frame that corresponds to a last instance in each instance group and that is used to feed back a DMG SBP report, sensing measurement results corresponding to all instances in the instance group to the second device; or
sending, by the first device by using a frame that corresponds to a first instance in a next instance group and that is used to feed back a DMG SBP report, sensing measurement results corresponding to all instances in the instance group to the second device.

25. The method according to claim 22, wherein the obtaining, by a first device, a sensing measurement result comprises:
self-sending and self-receiving, by the first device, a sensing PPDU, and performing sensing measurement based on the sensing PPDU to obtain the sensing measurement result.

26. The method according to claim 22, wherein the obtaining, by a first device, a sensing measurement result comprises:
sending, by the first device, the sensing PPDU to a third device, wherein the third device comprises one or more devices; and receiving, by the first device, the sensing measurement result from the third device, wherein the sensing measurement result is determined by the third device based on the sensing PPDU.

27. The method according to claim 22, wherein the obtaining, by a first device, a sensing measurement result comprises:
receiving, by the first device, a sensing PPDU from the third device; and
performing, by the first device, sensing measurement based on the sensing PPDU, to obtain the sensing measurement result.

28. The method according to claim 22, wherein the sensing measurement comprises at least one instance group, and each instance group in the at least one instance group comprises one or more instances; and
each of the one or more instances comprises:
obtaining a sensing physical layer protocol data unit PPDU, and performing the sensing measurement based on the sensing PPDU, to obtain the sensing measurement result.

29. The method according to any one of claims 22 to 28, wherein the method further comprises:
sending, by the first device, a first frame to the second device, wherein the first frame comprises a first message, and the first message is used to notify the second device to prepare to receive a sensing measurement result.

30. The method according to claim 29, wherein the sending, by the first device, a first frame to the second device comprises:
sending, by the first device, the first frame to the second device per instance before each instance starts; or
sending, by the first device, the first frame to the second device per instance group before each instance group starts.

31. The method according to claim 25 or 27, wherein the performing, by the first device, sensing measurement comprises:
performing, by the first device, the sensing measurement when receiving a second frame from the second device.

32. The method according to any one of claims 22 to 31, wherein the method further comprises:
receiving, by the first device, a DMG SBP request frame from the second device, wherein the DMG SBP request frame is used to request the second device to establish SBP with the first device; and
sending, by the first device, a DMG SBP response frame to the second device, wherein the DMG SBP response frame indicates that the first device successfully establishes DMG SBP with the second device.

33. The method according to any one of claims 22 to 31, wherein the method further comprises:
sending, by the first device, a DMG measurement setup request frame to the third device, wherein the DMG measurement setup request frame is used to request to establish DMG measurement, and the third device comprises one or more devices; and
receiving, by the first device, a DMG measurement setup response frame from the third device, wherein the DMG measurement setup response frame indicates that the first device successfully establishes DMG measurement with the third device.

34. The method according to any one of claims 29 to 31, wherein the first frame is a DMG sensing request frame or a DMG sensing poll frame.

35. The method according to claim 34, wherein the first frame is the DMG sensing request frame, the DMG sensing request frame comprises a time division duplex TDD beamforming information field, the TDD beamforming information field comprises a first field, a DMG measurement setup identifier ID field, a measurement instance group ID field, a sensing instance sequence number SN field, and a sensing type field, and the first message is determined based on the first field.

36. The method according to claim 34, wherein the first frame is the DMG sensing poll frame, and the DMG sensing poll frame comprises a DMG measurement setup identifier ID field, a measurement instance group ID field, and a sensing instance sequence number SN field.

37. A communication apparatus, comprising:
a sending unit, configured to send a first frame to a second device, wherein the first frame comprises a first message, and the first message is used to notify the second device to prepare to receive a sensing measurement result; and
a processing unit, configured to obtain the sensing measurement result.

38. The apparatus according to claim 37, wherein the processing unit is specifically configured to: send and receive a sensing physical layer protocol data unit PPDU, and perform sensing measurement based on the sensing PPDU to obtain the sensing measurement result.

39. The apparatus according to claim 37, wherein the processing unit is specifically configured to: send a sensing PPDU to a third device, wherein the third device comprises one or more devices; and receive the sensing measurement result from the third device, wherein the sensing measurement result is determined by the third device based on the sensing PPDU.

40. The apparatus according to claim 37, wherein the processing unit is specifically configured to: receive a sensing PPDU from a third device; and perform sensing measurement based on the sensing PPDU to obtain the sensing measurement result.

41. The apparatus according to any one of claims 38 to 40, wherein the sensing measurement comprises at least one instance group, and each instance group in the at least one instance group comprises one or more instances; and
each of the one or more instances comprises:
obtaining, by the processing unit, the sensing physical layer protocol data unit PPDU, and performing the sensing measurement based on the sensing PPDU, to obtain the sensing measurement result.

42. The apparatus according to any one of claims 38 to 41, wherein the sending unit is specifically configured to:
send the first frame to the second device per instance before each instance starts; or
send the first frame to the second device per instance group before each instance group starts.

43. The apparatus according to any one of claims 38 to 42, wherein the sending unit is further configured to send the sensing measurement result to the second device.

44. The apparatus according to claim 43, wherein the sending unit is specifically configured to:
send the sensing measurement result to the second device after each instance ends; or
send the sensing measurement result to the second device after each instance group ends.

45. The apparatus according to claim 44, wherein the sending unit is specifically configured to:
send, by using a frame that corresponds to each instance and that is used to feed back a DMG SBP report, the sensing measurement result corresponding to the instance to the second device.

46. The apparatus according to claim 44, wherein the sending unit is specifically configured to:
send, by using a frame that corresponds to a last instance in each instance group and that is used to feed back a DMG SBP report, sensing measurement results corresponding to all instances in the instance group to the second device; or
send, by using a frame that corresponds to a first instance in a next instance group and that is used to feed back a DMG SBP report, sensing measurement results corresponding to all instances in the instance group to the second device.

47. The apparatus according to any one of claims 37 to 46, wherein the processing unit is specifically configured to:
perform the sensing measurement when a second frame is received from the second device.

48. The apparatus according to any one of claims 37 to 47, wherein the receiving unit is further configured to receive a DMG SBP request frame from the second device, wherein the DMG SBP request frame is used to request the second device to establish SBP with the first device; and
the sending unit is further configured to send a DMG SBP response frame to the second device, wherein the DMG SBP response frame indicates that the first device successfully establishes DMG SBP with the second device.

49. The apparatus according to any one of claims 37 to 48, wherein the sending unit is further configured to send a DMG measurement setup request frame to the third device, wherein the DMG measurement setup request frame is used to request to establish DMG measurement, and the third device comprises one or more devices; and
the receiving unit is further configured to receive a DMG measurement setup response frame from the third device, wherein the DMG measurement setup response frame indicates that the first device successfully establishes DMG measurement with the third device.

50. The apparatus according to any one of claims 37 to 49, wherein the first frame is a DMG sensing request frame or a DMG sensing poll frame.

51. The apparatus according to claim 50, wherein the first frame is the DMG sensing request frame, the DMG sensing request frame comprises a time division duplex TDD beamforming information field, the TDD beamforming information field comprises a first field, a DMG measurement setup identifier ID field, a measurement instance group ID field, a sensing instance sequence number SN field, and a sensing type field, and the first message is determined based on the first field.

52. The apparatus according to claim 50, wherein the first frame is the DMG sensing poll frame, and the DMG sensing poll frame comprises a DMG measurement setup identifier ID field, a measurement instance group ID field, and a sensing instance sequence number SN field.

53. A communication apparatus, comprising:
a receiving unit, configured to receive a first directional multi-gigabit DMG sensing by proxy SBP request frame from a second device, wherein the first DMG SBP request frame comprises first sensing scheduling information; and
a processing unit, configured to: determine that sensing scheduling information of a third device matches the first sensing scheduling information, and send a first DMG SBP response frame to the second device, wherein the third device comprises one or more devices, and the first DMG SBP response frame indicates that the first device successfully establishes DMG SBP with the second device; or
determine that sensing scheduling information of one or more devices in the third device does not match the first sensing scheduling information, and send a second DMG SBP response frame to the second device, wherein the second DMG SBP response frame indicates that the first device fails to establish DMG SBP with the second device.

54. The apparatus according to claim 53, wherein the processing unit is further configured to: determine that current sensing scheduling information of the one or more devices in the third device does not match the first sensing scheduling information, and send a DMG SBP termination frame to the second device, wherein the DMG SBP termination frame indicates that the first device terminates DMG SBP with the second device.

55. The apparatus according to claim 54, wherein the DMG SBP termination frame comprises the sensing scheduling information of the third device.

56. The apparatus according to any one of claims 53 to 55, wherein the first DMG SBP response frame and/or the second DMG SBP response frame comprise/comprises the sensing scheduling information of the third device, the sensing scheduling information is one or more DMG sensing scheduling subelements, and the DMG sensing scheduling subelement is carried in a DMG sensing measurement setup element.

57. The apparatus according to any one of claims 53 to 56, wherein the receiving unit is further configured to receive a second DMG SBP request frame from the second device, wherein the second DMG SBP request frame comprises second sensing scheduling information, and the second sensing scheduling information is determined based on the sensing scheduling information of the third device.

58. A communication apparatus, comprising
a processing unit, configured to obtain a sensing measurement result; and
a sending unit, configured to send the sensing measurement result to a second device, and specifically configured to:
send the sensing measurement result to the second device after each instance ends; or
send the sensing measurement result to the second device after each instance group ends.

59. The apparatus according to claim 58, wherein the sending unit is specifically configured to:
send, by using a frame that corresponds to each instance and that is used to feed back a DMG SBP report, the sensing measurement result corresponding to the instance to the second device.

60. The apparatus according to claim 58, wherein the sending unit is specifically configured to:
send, by using a frame that corresponds to a last instance in each instance group and that is used to feed back a DMG SBP report, sensing measurement results corresponding to all instances in the instance group to the second device; or
send, by using a frame that corresponds to a first instance in a next instance group and that is used to feed back a DMG SBP report, sensing measurement results corresponding to all instances in the instance group to the second device.

61. The apparatus according to claim 58, wherein the processing unit is specifically configured to:
send and receive a sensing PPDU, and perform sensing measurement based on the sensing PPDU to obtain the sensing measurement result.

62. The apparatus according to claim 58, wherein the processing unit is specifically configured to:
send the sensing PPDU to a third device, wherein the third device comprises one or more devices; and receive the sensing measurement result from the third device, wherein the sensing measurement result is determined by the third device based on the sensing PPDU.

63. The apparatus according to claim 58, wherein the processing unit is specifically configured to:
receive a sensing PPDU from the third device; and
perform sensing measurement based on the sensing PPDU, to obtain the sensing measurement result.

64. The apparatus according to claim 58, wherein the sensing measurement comprises at least one instance group, and each instance group in the at least one instance group comprises one or more instances; and
each of the one or more instances comprises:
obtaining, by the processing unit, a sensing physical layer protocol data unit PPDU, and performing the sensing measurement based on the sensing PPDU, to obtain the sensing measurement result.

65. The apparatus according to any one of claims 58 to 64, wherein the sending unit is further configured to send a first frame to the second device, wherein the first frame comprises a first message, and the first message is used to notify the second device to prepare to receive a sensing measurement result.

66. The apparatus according to claim 65, wherein the sending unit is specifically configured to:
send the first frame to the second device per instance before each instance starts; or
send the first frame to the second device per instance group before each instance group starts.

67. The apparatus according to claim 61 or 63, wherein the processing unit is specifically configured to:
perform the sensing measurement when a second frame is received from the second device.

68. The apparatus according to any one of claims 58 to 67, wherein the apparatus further comprises:
a receiving unit, configured to receive a DMG SBP request frame from the second device, wherein the DMG SBP request frame is used to request the second device to establish SBP with the first device; and
the sending unit is further configured to send a DMG SBP response frame to the second device, wherein the DMG SBP response frame indicates that the first device successfully establishes DMG SBP with the second device.

69. The apparatus according to any one of claims 58 to 67, wherein the sending unit is further configured to send a DMG measurement setup request frame to the third device, wherein the DMG measurement setup request frame is used to request to establish DMG measurement, and the third device comprises one or more devices; and
the receiving unit is further configured to receive a DMG measurement setup response frame from the third device, wherein the DMG measurement setup response frame indicates that the first device successfully establishes DMG measurement with the third device.

70. The apparatus according to any one of claims 65 to 67, wherein the first frame is a DMG sensing request frame or a DMG sensing poll frame.

71. The apparatus according to claim 70, wherein the first frame is the DMG sensing request frame, the DMG sensing request frame comprises a time division duplex TDD beamforming information field, the TDD beamforming information field comprises a first field, a DMG measurement setup identifier ID field, a measurement instance group ID field, a sensing instance sequence number SN field, and a sensing type field, and the first message is determined based on the first field.

72. The apparatus according to claim 70, wherein the first frame is the DMG sensing poll frame, and the DMG sensing poll frame comprises a DMG measurement setup identifier ID field, a measurement instance group ID field, and a sensing instance sequence number SN field.

73. A communication apparatus, comprising a processor, a memory, an input interface, and an output interface, wherein the input interface is configured to receive information from a communication apparatus other than the communication apparatus, the output interface is configured to output information to the communication apparatus other than the communication apparatus, and when a stored computer program stored in the memory is invoked by the processor, the method according to any one of claims 1 to 16 is implemented, or the method according to any one of claims 17 to 21 is implemented, or the method according to any one of claims 22 to 36 is implemented.

74. A computer-readable storage medium, wherein the computer-readable storage medium stores a computer program or computer instructions, and when the computer program or the computer instructions are executed by a processor, a first device is supported in implementing the method according to any one of claims 1 to 16, or a first device is supported in implementing the method according to any one of claims 17 to 21, or a first device is supported in implementing the method according to any one of claims 22 to 36.

75. A computer program product comprising program instructions, wherein when the program instructions are run on a computer, the method according to any one of claims 1 to 16 is implemented, or the method according to any one of claims 17 to 21 is implemented, or the method according to any one of claims 22 to 36 is implemented.

76. A chip system, comprising at least one processor, memory, and interface circuit, wherein the memory, the interface circuit, and the at least one processor are interconnected through a line, the at least one memory stores instructions, and when the instructions are executed by the processor, a first device is supported in implementing the method according to any one of claims 1 to 16, or a first device is supported in implementing the method according to any one of claims 17 to 21, or a first device is supported in implementing the method according to any one of claims 22 to 36.

77. A communication system, comprising a first device, a second device, and a third device, wherein the first device is configured to perform the method according to any one of claims 1 to 16, or is configured to perform the method according to any one of claims 17 to 21, or is configured to perform the method according to any one of claims 22 to 36.
